# EUROPEAN PATENT APPLICATION

(11) **EP 0 817 121 A2**
(43) Date of publication of application: **07.01.1998**
(21) Application number: 97108967.7
(22) Date of filing: 04.06.1997
(51) Int. Cl.: G06T 9/00

(54) **Image coding method and system**

(30) Priority: 06.06.1996 JP 144034/96; 27.08.1996 JP 224877/96
(71) Applicant: MATSUSHITA ELECTRIC INDUSTRIAL CO., LTD., Kadoma-shi, Osaka 571 (JP)
(72) Inventor: Hagai, Makoto, Osaka-shi, Osaka 631 (JP); Kadono, Shinya, Kobe-shi, Hyogo 651-11 (JP); Okuno, Maki, Himeji-shi, Hyogo 670 (JP)
(74) Representative: Kügele, Bernhard

(57) **Abstract**

The invention of the present application relates to an image coding method comprising a step of extracting a feature signal expressing a feature of an input image signal, such as density, contour and edge, a coding step for performing different image coding processes depending on each one of feature information of extracted feature signals, and a step of coding an identification signal for identifying each one of said plural coding processes, its decoding method, and an image coding and decoding apparatus using such method, and therefore if the input image signal has a sharp density change before after the shape boundary as in computer graphics, if there are uniform density and discrete density in every region, an efficient coding step is selected adaptively, so that an efficient coding is achieved, while a correct decoding is realized.

## Description

### FIELD OF THE INVENTION

The present invention relates to an image coding method and decoding method for coding by curtailing the data quantity of image signal, for the purpose of efficient use of memory capacity and transmission line capacity, in recording and transmission of image signal, an image coding apparatus and decoding apparatus using such methods, and a recording medium recording a program for realizing them by software.

### BACKGROUND OF THE INVENTION

As a efficient image coding apparatus for natural images, image coding apparatuses by JPEG and MPEG systems have been known. In both methods, an input image signal is divided into rectangular blocks, and orthogonal transform (such as discrete cosine transform) is employed. The discrete cosine transform is one of the techniques of transform coding of orthogonal transform in rectangular block units, and is widely known as a technique for efficient coding of natural image signals.

On the other hand, the image signals include a combined image obtained by artificially combining a plurality of images, aside from the image composed of one ordinary image such as the natural image.

The combined image can be created by coding images including objects before combining by an image coding apparatus, and selecting images of objects arbitrarily, and decoding and combining by an image decoding apparatus, and it can be used in image database and the like. Such combined image requires, aside from the luminance signal and color difference signal, a signal called transmissivity signal for specifying the rate of mixing with the background image.

As a feature of the transmissivity signal, particularly in an image including an opaque object, almost all pixels in the transmissivity image can be classified into opaque and transparent types depending on the object shape. In the boundary area, of the object region of transmissivity signal, a steep density change often occurs in the portion between the opaque part and transparent part. Other example of image having such feature is the computer graphic (CG). In CG, similarly, the density change of pixels in the object shape is uniform, and the density change in the object boundary area is large, characteristically.

Coding methods of transmissivity signal and CG include a method of wave form coding of blocks of rectangular regions same as in JPEG or MPEG method by forming image signals into blocks, and a method of binary coding of shape after extracting object shape of image signals. In binary image coding, various methods are known, including a method of direct coding of binary shape such as run-length coding, a method of chain coding of contour line after extracting an object contour line by boundary line tracing method or the like, and a contour coding method utilizing curved line approximation (Japanese Laid-Open Patent No. 58-134745).

In such method of coding of image signal by JPEG or MPEG method, however, a steep density change occurs in the object boundary, and high frequency components are included in the block, and hence it is hard to code efficiently. On the other hand, in the method of binary image coding after extracting object from image signal, although the coding efficiency is improved, it is impossible to code if image signals of multiple values are included in the shape.

Besides, recently, owing to the rapid progress in ,computer technology, image signals created by a computer come to be used more frequently, in addition to the natural images taken by a camera or the like. The image signal created by a computer has a different statistical property from the natural image, and, for example, a very sharp edge and discrete pixel values (often nearly a constant density in each region, with a discrete density distribution from an adjacent region) are features not found in the natural image. Such sharp edge and discrete pixel values characteristic of the computer image significantly deteriorate the coding efficiency in the conventional coding technique for natural images such as discrete cosine transform.

### SUMMARY OF THE INVENTION

In the light of the above background, it is hence an object of the invention to provide a coding and decoding method capable of decoding efficiently and accurately depending on the feature of the input image signal, an image coding apparatus and image decoding apparatus using the same, and a recording medium recording the software for realizing this.

To solve the problems and code the images such as transmissivity signal and CG efficiently, the invention is constituted as summarized below.

A first aspect of the invention relates to an image coding method comprising a step of extracting a feature signal expressing the feature of an input image signal, a step of coding by different image coding process depending on the feature information of the extracted feature signal, and a step of coding an identification signal for identifying each one of plural coding processes, an image coding apparatus using the same, a decoding method for decoding the image signal coded by this method and an image decoding apparatus using the same, and a recording medium recording the methods for executing them.

Accordingly, the coding method and decoding method depending on the features of the signal of the input image signal, for example, the feature signals based on the information expressing the features of parts of image such as edge, contour, density change and transmissivity in the screen can be applied automatically, and therefore an efficient coding suited to the features of the image can be achieved, while an accurate decoding is enabled.

A second aspect of the invention relates to the coding method of the first aspect of the invention, in which the image shape information is extracted as a feature signal at the step of extracting the feature signal, and the pixel in the shape boundary area is replaced depending on this shape information.

Accordingly, if the input image signal is like computer graphics, that is, a sharp density change occurs before or after the shape boundary and the density is uniform in other portions, an efficient coding step is selected adaptively, and therefore an efficient coding is achieved, while an accurate decoding is enabled.

A third aspect of the invention relates to plural coding methods of the first aspect of the invention, further comprising a discrete step of transforming the pixel value of the input image signal from multiple value to discrete value, and a step of filtering and interpolating the discrete output, whereby the discrete output or the filtered and interpolated output is coded.

Accordingly, depending on the types of the input image signal, that is, whether the computer graphics featuring a sharp density change and a uniform density, or the natural image, either efficiency coding step is selected adaptively, and therefore an efficient coding is achieved, while an accurate decoding is enabled.

### BRIEF DESCRIPTION OF THE DRAWINGS

Fig. 1 is a conceptual diagram showing an image coding method in embodiment 1 of the invention.

Fig. 2 is a block diagram showing a basic constitution of an image coding apparatus in embodiment 1 of the invention.

Fig. 3 is a conceptual diagram showing a transforming method of pixels outside of an object region in embodiment 1 of the invention.

Fig. 4 is a block diagram showing a basic constitution of an image decoding apparatus in embodiment 2 of the invention.

Fig. 5 is a conceptual diagram showing an image coding method in embodiment 3 of the invention.

Fig. 6 is a block diagram shoving a basic constitution of an image coding apparatus in embodiment 3 of the invention.

Fig. 7 is a block diagram showing a basic constitution of an image decoding apparatus in embodiment 4 of the invention.

Fig. 8 (a) is an image display example of an image signal according to embodiment 5 of the invention.

Fig. 8 (b) is an example of graph showing image display x-y horizontal direction pixel values of image signal according to embodiment 5 of the invention.

Fig. 9 is a block diagram showing a basic constitution of an image coding apparatus in embodiment 5 of the invention.

Fig. 10 is a block diagram showing a basic constitution of an image decoding apparatus in embodiment 5 of the invention.

Fig. 11 (a) is an example of graph showing image display example x-y horizontal direction pixel values of image signal according to embodiment 5 of the invention.

Fig. 11 (b) is an example of graph showing image display x-y horizontal direction pixel values of image signal after interpolating process of a boundary area.

Fig. 12 is a block diagram showing a basic constitution of the image coding apparatus accompanied by boundary area interpolating process in embodiment 5 of the invention.

Fig. 13 is a block diagram showing a basic constitution of the image decoding apparatus accompanied by boundary area interpolating process in embodiment 5 of the invention.

Fig. 14 is a block diagram showing a basic constitution of an image coding apparatus in embodiment 6 of the invention

Fig. 15 is a block diagram showing a basic constitution of an image decoding apparatus in embodiment 7 of the invention.

Fig. 16 is a conceptual diagram showing an image coding method in embodiment 8 of the invention.

Fig. 17 is a block diagram showing a basic constitution of an image coding apparatus in embodiment 8 of the invention.

Fig. 18 is a block diagram showing a basic constitution of an image decoding apparatus in embodiment 9 of the invention.

Fig. 19 is a conceptual diagram showing an image coding method in embodiment 10 of the invention.

Fig. 20 is a block diagram showing a basic constitution of an image coding apparatus in embodiment 10 of the invention.

Fig. 21 is a block diagram showing a basic constitution of an image decoding apparatus in embodiment 11 of the invention.

Fig. 22 is a block diagram of an image coding apparatus in embodiment 12 of the invention.

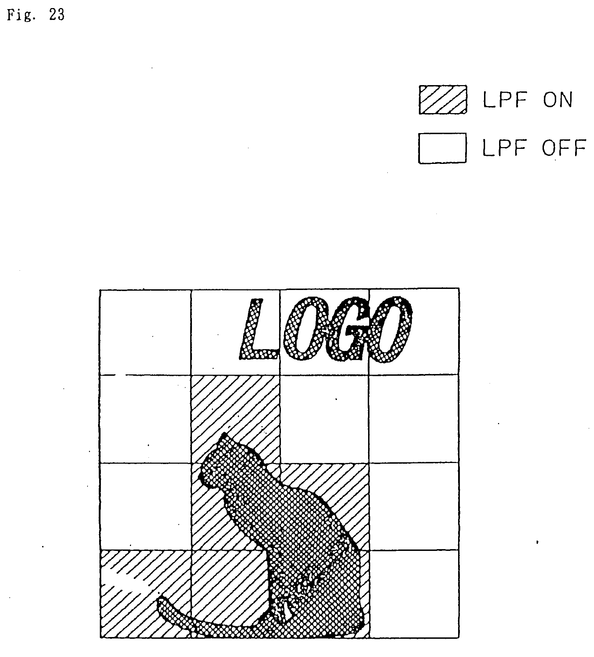

Fig. 23 is an explanatory diagram of operation of embodiment 12 of the invention.

Fig. 24 is a block diagram of an image coding apparatus in embodiment 13 of the invention.

Fig. 25 is a block diagram of an image coding apparatus in embodiment 14 of the invention.

Fig. 26 is a block diagram of an image decoding apparatus in embodiment 15 of the invention.

Fig. 27 is a block diagram of an image decoding apparatus in embodiment 16 of the invention.

Fig. 28 is a block diagram of an image coding apparatus in embodiment 17 of the invention.

Fig. 29 an explanatory diagram of an example of coding by dividing a pixel value into four divisions in the amplitude direction.

Fig. 30 is a block diagram of an image coding apparatus in embodiment 18 of the invention.

Fig. 31 an explanatory diagram of an example of coding by dividing a pixel value into four divisions in the amplitude direction.

Fig. 32 is a block diagram of an image decoding apparatus in embodiment 19 of the invention.

Fig. 33 is a block diagram of an image decoding apparatus in embodiment 20 of the invention.

Fig. 34 is a block diagram of an image coding apparatus in embodiment 21 of the invention.

Fig. 35 is an explanatory diagram of pixels to be referred to by a pixel decimating device 2271.

Fig. 36 is a block diagram of an image decoding apparatus in embodiment 22 of the invention.

Fig. 37 is a block diagram of an image coding apparatus in embodiment 23 of the invention.

Fig. 38 is a block diagram of an image coding apparatus in embodiment 24 of the invention.

Fig. 39 is a block diagram of an image decoding apparatus in embodiment 25 of the invention.

Fig. 40 is a block diagram of a recording medium according to embodiment 26 of the invention.

### [Description of Reference Numerals]

1, 201 Image signal
2, 202 Shape extracting means
3 Shape information
4, 204 Shape coding means
5, 205, 506 Shape coded signal
6 Off-shape pixel replacing means
7 Image signal coding means
8 Image signal coded signal
9 Image signal decoding means
10, 606 Shape restoring means
11 Off-shape pixel restoring means
12 Decoded signal
13, 901 Boundary extracting means
14 Boundary replacing means
15 Boundary interpolating means
16 Differential means
17 Boundary coding means
18 Boundary coded signal
19 Boundary decoding means
20 Adder
21 Boundary replacing means
22 Delay buffer
23 Motion compensation means
24 Predict signal
25 Pixel ratio detecting means
26 Pixel ratio coding means
27 Pixel ratio coded signal
28 Multiplier
29 Pixel ratio decoding means
30 Image discrete means
31, 33 Coded signal multiplexing means
32 Multiplexed image coded signal
34 Multiplexed shape coded signal
35, 36 Multiplexed signal separating means
37 Decoded signal combining means
501 In-shape pixel coding means
701, 702 In-shape pixel decoding means
703 In-shape pixel restoring means
1101 Boundary interpolation parameter determining means
1302 Boundary interpolating means
222, 3105 m-Value forming device
224, 2270, 3100 Block forming device
226, 2220, 2240i, 2250i, 2266, 2272, 3104, 3106, 3110 Encoder
228, 2230, 2242i, 2258i, 2268, 2274, 3122, 3124, 3130 Decoder
2210, 3126 Reverse m-forming device
2212, 2216, 2244i, 2248i, 2260, 2264, 3102, 3108, 3120, 3128 Switch
2214, 2246i, 2262 LPF
2217, 2254, 2278 Memory
2226, 3112 Comparator
2232, 2280, 3132 Reverse block forming device
2238, 2256 Divider
2252 Blender
2271 Pixel decimating device
2276 Pixel interpolating device

### DESCRIPTION OF THE PREFERRED EMBODIMENTS

Referring now to the drawings, preferred embodiments of the invention are described in detail below. In the embodiments of the invention, the transmissivity signal is shown as an input example, but the method of the invention may be also applied to other images having similar image properties such as CG.

### (Embodiment 1)

A transmissivity signal is a contrast signal composed of pixels expressing the transmissivity, from which shape information can be extracted, by pixel regions over a certain transmissivity in the transmissivity signal to be inside of an object shape, and other regions, outside of an object shape. Thus extracted shape information can be expressed as binary image of "in-shape" and "off-shape," so that it may be coded by employing the coding method of binary image.

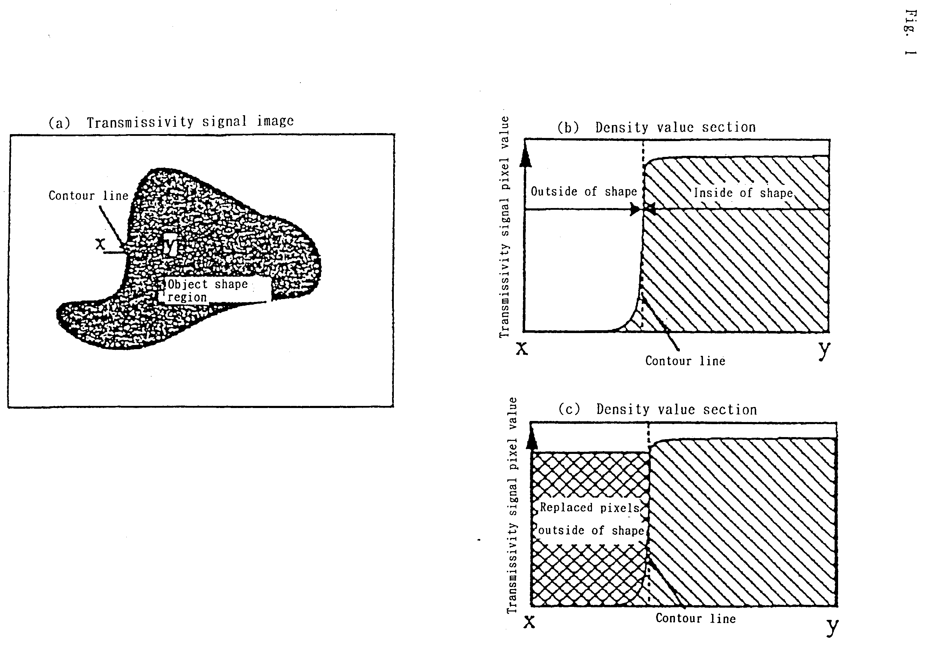

Fig. 1 is a conceptual diagram of an image coding method in embodiment 1. In Fig. 1 (a), the solid painted region of the transmissivity signal shows the inside of the object shape, and the blank region is the outside of the object shape, and the boundary of the painted portion and blank portion shows the contour line of the object region.

Fig. 1 (b) shows the density section of the image signal is cut out so as to intersect the contour line (in the diagram, when the value of the density section is 0, the transmissivity is 100%, showing the transmissivity is lowered as the value becomes higher). The density section by replacing the pixels outside of the object shape in the transmissivity signal depending on the transmissivity signal inside of the object shape is the image shown in Fig. 1 (c).

As shown in Fig. 1 (b), generally, in the object region boundary portion, since the density change is sharp, the coding efficiency is not high in the DCT (discrete cosine transform) coding employed in MPEG or JPEG. Accordingly, as shown in Fig. 1 (c), the pixel outside of the object shape is replaced before coding so that the high frequency component may be smaller, and the coding efficiency in this area is enhanced. However, when a replaced coded signal is decoded, a replaced pixel is left over in the region outside of the object shape which should be transparent by nature. To restore to the original transmissivity signal, it is necessary to return the pixel outside of the object shape of the decoded image to be transparent. In the decoding apparatus, accordingly, the coded signal of the shape information delivered by the coding apparatus is decoded to be distinguished between inside and outside of shape, and the off-shape pixel is returned to a transparent signal (transmissivity 100%). In this method, the image outside of the shape can be restored, and correct decoding is realized.

In this method, moreover, if the distortion of the decoded image is large in quantizing process or the like after transforming and coding by DCT or the like, the object shape can be favorably decoded from the shape information. Accordingly, if the demanded coding bit rate is low, only the shape information may be sent, or if high, the transparency information in the object shape may be further transmitted, so that coding scalability depending on the bit rate (flexible change of processing depending on the situation) can be easily realized.

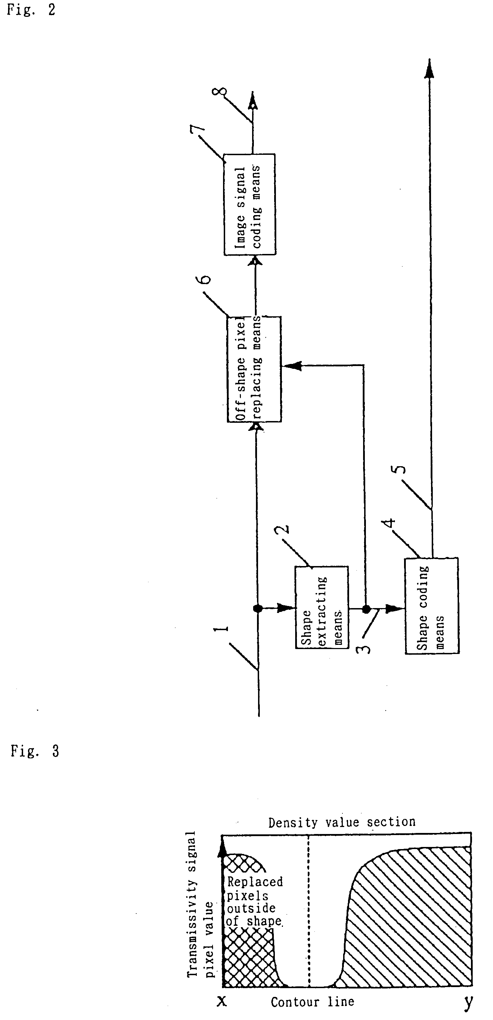

Fig. 2 is a block diagram showing a basic constitution of an image coding apparatus according to embodiment 1. In the diagram, an image signal 1 is put into the image coding apparatus. Shape extracting means 2 is means for extracting shape information 3 showing an object shape from the image signal 1. Shape coding means 4 is means for coding the shape information 3 issued by the shape extracting means 2, and delivering as a shape coded signal 5. Off-shape pixel replacing means 6 is means for replacing the pixel of the image signal 1 to be judged outside of the shape from the shape information 3. Image signal coding means 7 is means for coding the image signal replacing the off-shape pixel in the off-shape pixel replacing means 7, and delivering as an image signal coded signal 8.

In thus constituted image coding apparatus of embodiment 1, the operation is described below. The shape extracting means 2 divides the image signal 1 into binary values from a specific threshold, and extracts the shape information 3. The shape extracted image may be expressed as binary in-shape and off-shape images. By the shape coding means 4, this shape information 3 is coded by binary image coding method, for example, run-length coding, and is delivered as shape coded signal 5.

On the other hand, the off-shape pixel replacing means 6 receives the shape information 3 and image signal 1, judges inside of shape and outside of shape by the shape information 3, and replaces the off-shape image of the image signal 1 according to a specific rule (for example, a method of generating the pixel value so that the high frequency component may be small, or average in the block). As a result, the coding efficiency of the image signal coding means 7 in the object region boundary may be enhanced.

The image coding means 7 encodes the image signal replaced by the off-shape pixel replacing means 6 by DCT, quantizing, variable length coding or other method same as in MPEG system, and delivers as an image coded signal 8.

If irreversible coding is employed in the shape coding means 4, in order to match the shape information between the coding apparatus side and decoding apparatus side, it is necessary to decode the shape coded signal 5, and use the decoded shape information as the shape information of the off-shape pixel replacing means 6.

In the threshold processing of the shape extracting means 2 of the embodiment, meanwhile, the threshold may be either constant or variable (for example, the image is formed into blocks, and the threshold is determined depending on the value of the image signal in the block).

In the shape extracting means 2 of the embodiment, the extracting method by threshold processing is shown, but a region dividing method (such as regional growing) may be employed, or, if known, the object shape may be used.

To alleviate complicatedness of shape information, the image signal may be processed by filtering (for example, low pass filter, morphological filter) before input into the coding apparatus, or the shape information delivered by the shape extracting means 2 may be processed by binary filter (for example, binary morphological filter).

In the shape coding means 4 of the embodiment, coding by run-length coding is shown, but it may be also replaced by MMR coding or quad-tree coding.

Alternatively, by the shape coding means 4 of the embodiment, the contour line of the object shape may be extracted by the boundary tracing method, and the contour line may be coded by chain coding, or parameter output coding by curved line approximation.

Examples of specific rule of the off-shape pixel replacing means 6 of the embodiment include a method of replacing the pixels outside of the object shape by the threshold used in the shape extracting means 2, a method of replacing the pixels outside of the object shape by the average of the pixels inside of the object shape, a method of replacing with the pixel on the boundary line, and a method of replacing the pixel so that the density section may be symmetrical as shown in Fig. 3.

In the image signal coding means 7 of the embodiment, coding by employing DCT is shown, but coding is also realized by discrete sine transform (DST), KL transform, wavelet transform, hurl transform, fractal coding, DPCM coding, vector quantizing coding, sub-band coding, or combined coding of quad-tree and vector quantizing.

Coding in this embodiment may be done in image unit, or formed image block unit.

Moreover, if the transmissivity in the shape is constant, in the image coding means 7, it is enough by coding and delivering only the constant value, and efficient coding is realized. In this case, it is not necessary to replace off-shape pixel by the off-shape pixel replacing means 7.

Thus, in this embodiment, the image signal having density change such as transmissivity signal can be coded efficiently.

### (Embodiment 2)

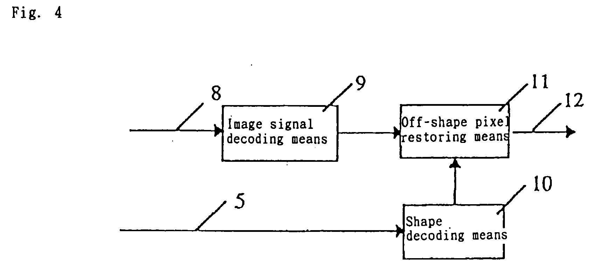

As embodiment 2, an image decoding apparatus is described by referring to Fig. 4. Fig. 4 is a block diagram showing a basic constitution of an image decoding apparatus of embodiment 2 of the invention, and in the diagram same parts as in embodiment 1 are identified with same reference numerals and detailed description is omitted. The image decoding apparatus of the embodiment is for decoding the image signal coded by the image coding apparatus in Fig. 2.

In Fig. 4, image signal decoding means 9 is means for decoding the image coded signal 8. Shape decoding means 10 is means for decoding the shape coded signal 5. Off-shape pixel restoring means 11 is for receiving decoded signal and shape information from the image decoding means 9, and restoring pixels outside of the shape for delivering a decoded signal 12.

In thus constituted image decoding apparatus of embodiment 2, the operation is described below.

The meaning of signals 5 and 8 in Fig. 4 are same as in embodiment 1, and description is omitted. The shape coded signal 5 is decoded by the shape decoding means 10, and inside of shape or outside of shape is judged from the decoded shape information. Since the pixels outside of the shape have been replaced by the coding apparatus, the pixel value is replaced with the original value of 0 (transmissivity 100%) by the off-shape pixel restoring means 11, and is delivered as an image decoded signal 12.

In the shape decoding means 10 of the embodiment, depending on the coding apparatus, run-length decoding, MMR decoding, quad-tree decoding, chain decoding, or decoding by approximation of curved line may be employed.

In the image decoding means 9 of the embodiment, depending on the coding apparatus, reverse DCT, reverse DST, reverse KL transform, wavelet decoding, reverse hurl transform, fractal decoding, DPCM decoding, reverse vector quantizing, or combined decoding of quad-tree and reverse vector quantizing may be employed. Incidentally, when the transmissivity in the shape is constant, it is enough by coding and delivering this constant value, and efficient coding is realized. In this case, it is not necessary to replace with pixels outside of the shape.

In this embodiment, depending on the coding apparatus, the image can be decoded in image unit or formed block unit of image.

Thus, according to the embodiment, the signal coded by the image coding apparatus of embodiment 1 can be correctly decoded.

### (Embodiment 3)

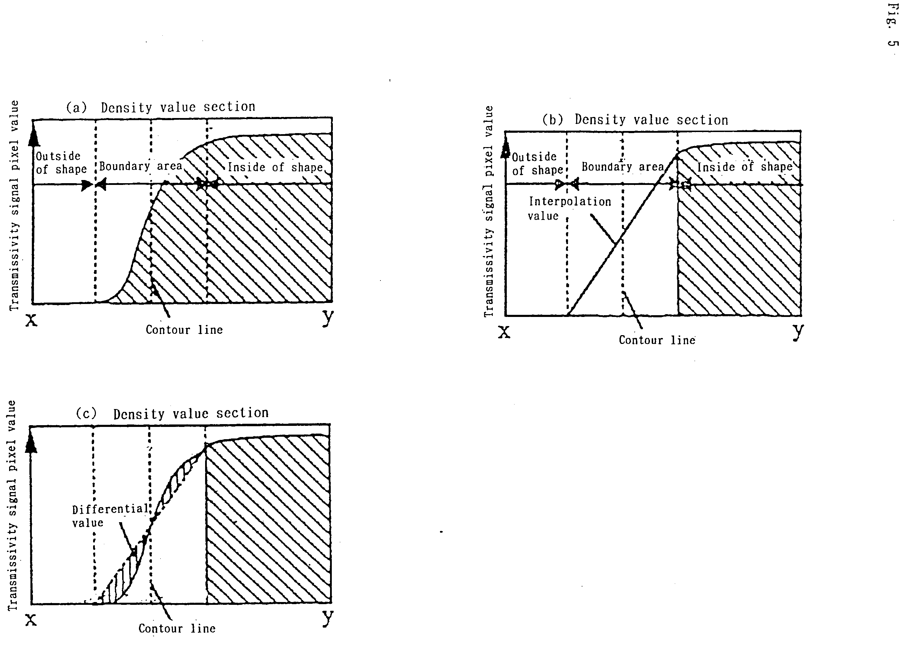

Fig. 5 is a conceptual diagram of an image coding apparatus in embodiment 3 of the invention.

Fig. 5 (a) shows a density section near the object region boundary of an entered image signal, Fig. 5 (b) shows a density section of an image by interpolation of pixel value in the boundary, and Fig. 5 (c) shows a differential value of an interpolated signal and an input image signal by a vertical line.

As described herein, the density value composition of transmissivity signal differs significantly between the object region boundary and the inside of the object shape, and efficient coding is difficult by one method. Accordingly, the coding efficiency is improved by dividing the processing between the inside of the object shape and the object region boundary, and coding by an appropriate method respectively. Same as in embodiment 1, the pixels outside of the shape are replaced, and the pixel value of the boundary area is similarly replaced. Thus replaced image does not contain high frequency component in the boundary area, so that efficient coding is realized. The boundary area is coded, for example, by DPCM coding, vector quantizing suited to boundary area, or any other method suited to boundary area.

In the boundary area, as shown in Fig. 5 (a), since the density often changes continuously from the inside of shape to outside of shape, the pixel value of the boundary area can be predicted by interpolating from the pixel values outside of shape and inside of shape as shown in Fig. 5 (b).

By calculating the difference between the predicted value and the entered image signal, and coding, efficiency coding is realized. At this time, depending on the density value composition of input image, by varying the interpolation parameter and delivering the interpolation parameter from the coding apparatus, same interpolation is possible in the coding apparatus by using the same information, so that it is possible to process adaptively depending on the difference in the density value composition of image.

In this method, when the required coding bit rate is low, the coded signal in the boundary area is not sent to decrease the data quantity, and when high, the coded signal in the boundary is sent, so that the scalability depending on the coding bit rate may be easily realized.

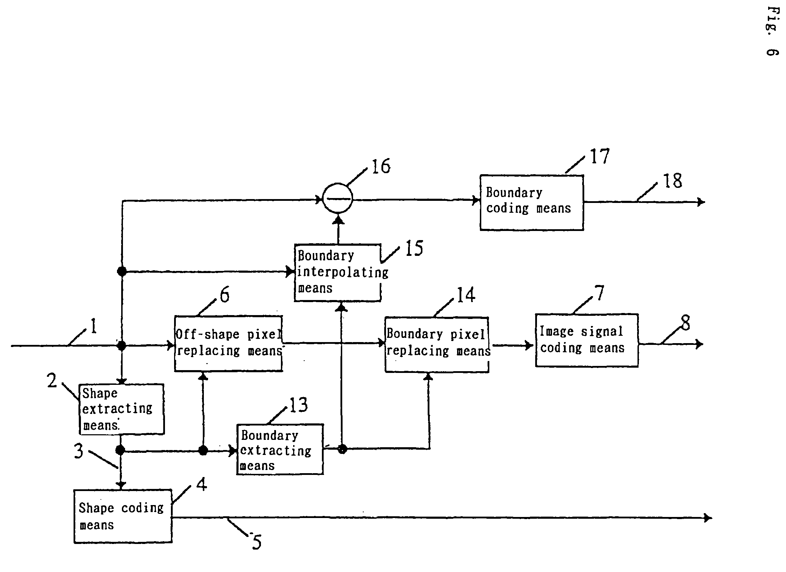

Fig. 6 is a block diagram showing a basic constitution of the image coding apparatus in embodiment 3 of the invention, and in the diagram the means and signals 1 to 8 are same as in embodiment 1 of the invention, and their description is omitted.

Boundary extracting means 13 is means for extracting the boundary area of object region from the shape information 3. Boundary pixel replacing means 14 is means for replacing the pixel in the boundary area. Boundary interpolating means 15 is means for receiving image signal 1 and boundary information, and interpolating the pixel in the boundary area by a specified method. Differential means 16 is means for calculating the difference between the image signal 1 and the interpolated image signal in the boundary area. Boundary coding means 17 is means for coding the differential value issued by the differential means 16.

In thus constituted image coding apparatus of embodiment 3, the operation is described below only in the portions different from embodiment 1. The boundary extracting means 13 determines the boundary area of the object region from the shape information 3 by a specific method (for example, a range of a specific distance from the object contour line is determined as the boundary area).

The boundary pixel replacing means 14 replaces the, pixel value in the boundary area so as not to contain high frequency component same as in embodiment 1, so as to be coded efficiently in the image signal coding means 7. The boundary interpolating means 15 interpolates the pixel `value of the boundary area from the pixel values inside of shape and outside of shape in specified processing (for example, linear interpolation, higher order interpolation, generation of false density change by low pass filter), and a predicted value of pixel in the boundary area is determined. Consequently, by the differential means 16, the difference of the predicted value and image signal 1 is calculated, and coded in the boundary coding means 17, and delivered as boundary coded signal 18.

In the embodiment, the value of input image is used in the boundary interpolating means 15, but if coding of image signal is irreversible coding, using the image decoded from the image coded signal 8 and shape coded signal 5, the image information inside of shape and outside of shape of the coding apparatus and decoding apparatus must be matched.

Meanwhile, by the processing method in the boundary interpolating method 15, or by delivering processing parameter (for example, mask parameter of low pass filtering, or interpolation parameter) and sending it into the decoding apparatus, it is possible to predict depending on the density value composition of the boundary area.

The processing parameter or output of processing method may be done in the image unit or block unit.

Thus, in the embodiment, by separating the process into the inside of object shape and boundary area and coding by individually suited method, efficiency coding is realized.

### (Embodiment 4)

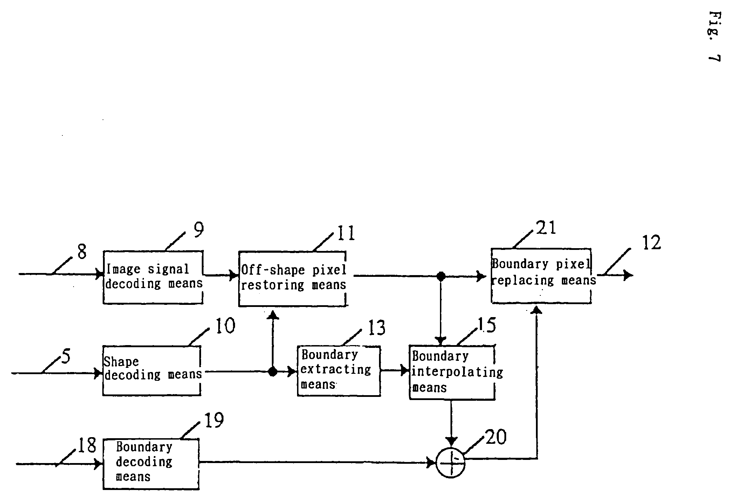

As embodiment 4, an image decoding apparatus is described by reference to Fig. 7. Fig. 7 is a block diagram showing a basic constitution of an image decoding apparatus in embodiment 4 of the invention, and in the diagram, the same signals and blocks having same functions as in embodiment 2 and embodiment 3 are identified with same reference numerals, and their description is omitted.

The image decoding apparatus of the embodiment is for decoding the image signal coded by the image coding apparatus in Fig. 6. Boundary decoding means 19 is means for decoding a boundary coded signal 18. Adder 20 is means for adding the decoded image signal of boundary area and the predicted value of the boundary area delivered by the boundary processing means 15.

In thus constituted image decoding apparatus of embodiment 4, the operation is described below only in the portions different from embodiment 2. The means of signals 8, 5, 18 in Fig. 7 are same as in embodiment 3, and their description is omitted.

The boundary interpolating means 15 generates a predicted value of the pixel in the boundary area in the same method as in embodiment 3. The boundary decoding means 19 decodes the boundary coded signal 18, and delivers the differential value. The adder 20 sums up the predicted value of the boundary area and the decoded differential value, and further the pixel value of the boundary area is replaced with the output of the adder 20 in the boundary replacing means 21, and an image decoded signal 12 is delivered.

Meanwhile, when the coding apparatus delivers the processing method or processing parameter of the boundary processing method 15, in the boundary interpolating means 15 of the decoding apparatus, it is necessary to process by using such processing method or processing parameter.

Thus, according to the embodiment, the signal coded by the image coding apparatus of embodiment 3 can be decoded correctly.

### (Embodiment 5)

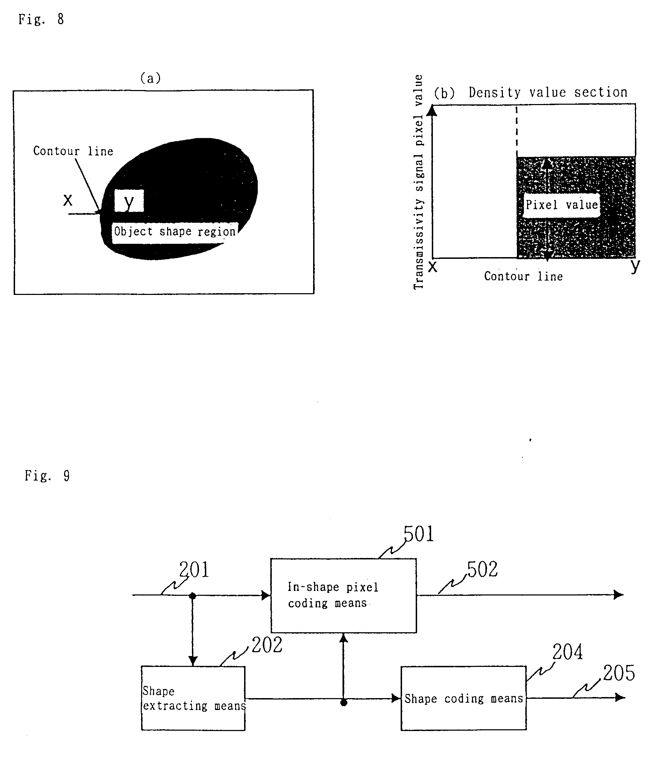

These examples presented so far in embodiment 1 through embodiment 4 are the cases mainly relating to general images, but in embodiment 5 shown in Figs. 8 through 13, by contrast, it is proved that more efficient coding is possible in the case of image having different features form natural image such as transmissivity image using transmissivity signal and computer graphics.

Fig. 8 (a) is an example of computer graphic image, in which an ellipse is located in the center, a non-passing area of nearly constant density is formed in the object shape region of the ellipse,and the outside of the object shape region is a transparent background with 100% transmissivity. The transmissivity changes in the horizontal direction (x, y direction) including the contour line in the boundary of the object shape region and background are shown in Fig. 8 (b). As known also from this diagram, the transmissivity of the object shape region in Fig. 8 (a) is nearly constant.

A block diagram of a coding circuit for coding such image is shown in Fig. 9. In Fig. 9, when an image as in Fig. 8 (a) is entered as an input image 201, the object shape information is extracted by shape extracting means 202, and this object shape information is coded in shape coding means 204, and is issued as a shape coded signal 205.

On the other hand, regarding the pixel value inside of the object shape of the input image 201 to be constant, the pixel value inside of the object shape is replaced by the constant value, the constant value is coded, and is issued as an in-shape pixel coded signal 502.

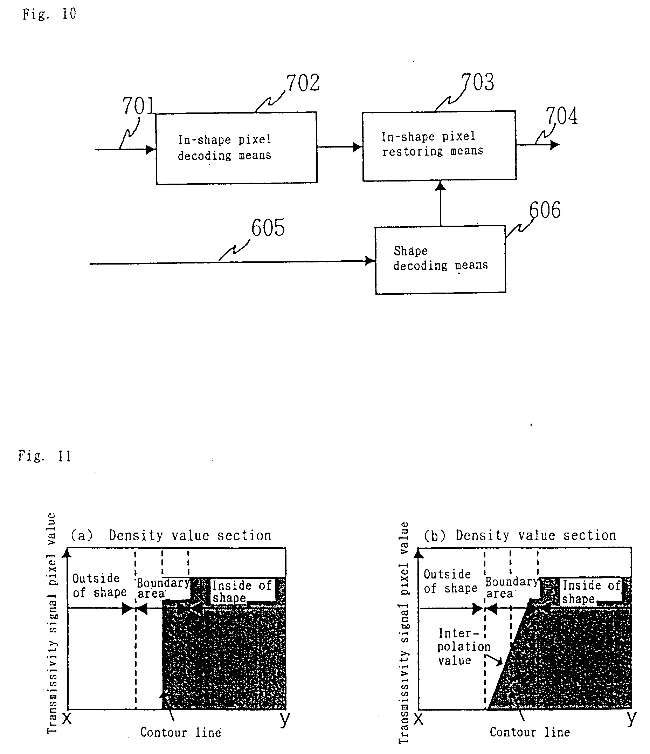

Fig. 10 shows an image decoding apparatus for decoding the image signal being coded in Fig. 9, in which an in-shape pixel coded signal 701 is entered, and the constant value is decoded by in-shape pixel decoding means 702.

On the other hand, a shape coded signal 605 is entered, the object shape information is decoded by shape decoding means 606, and from this shape information and the decoded constant value, the pixel value in the shape is replaced by the decoded constant value in in-shape pixel restoring means 703, and is issued as a decoded image 704.

In this method, depending on the features of the image, the object that can be simplified can be coded in a simple method, so that coding of high efficiency is achieved.

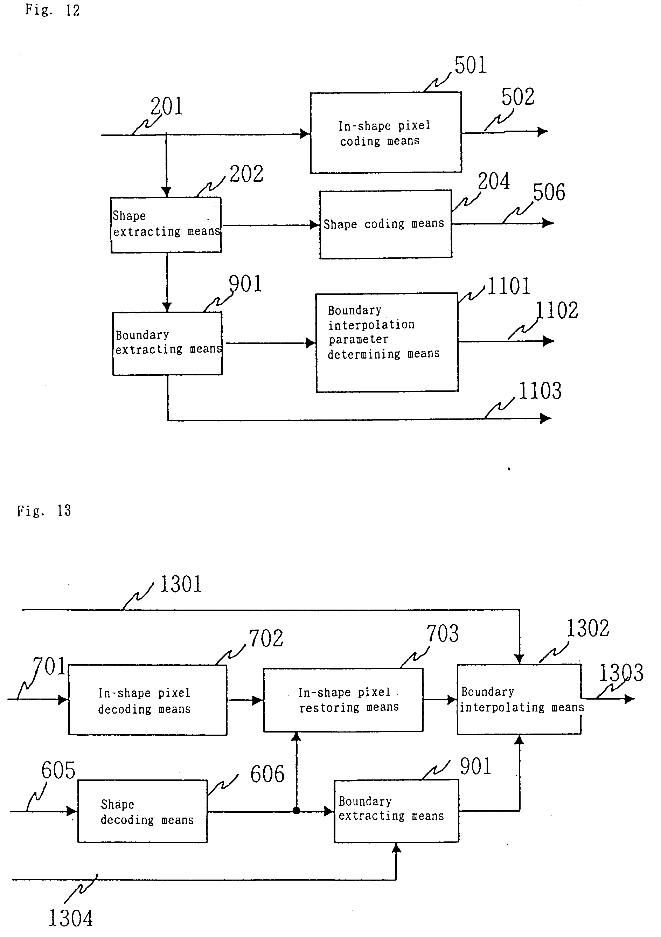

Fig. 11 shows a step for efficiently coding the boundary area of the image as shown in Fig. 8 (a). The coding means is shown in Fig. 12, and the coding step is described below together with the constitution in Fig. 12. Those having the same functions as in Fig. 9 are identified with same reference numerals.

First, same as in Fig. 9, in the in-shape pixel coding means 501, regarding the pixel value in the object shape region of the input image 201 to be constant, the pixel value inside of the object shape is replaced with the constant value, and this constant value is coded, and issued as in-phase pixel coded signal 502. Besides, the input image 201 is also entered into the shape extracting means 202, and the object shape information is extracted, and this object shape information is coded in the shape coding means 204, and is issued as a shape coded signal 205.

Consequently, on the basis of the shape information from the shape extracting means 202, the boundary area is extracted by boundary extracting means 901, and the boundary area is processed by filtering, and the boundary area is interpolated by the interpolation value shown in Fig. 11 (b).

At the same time, the interpolation parameter showing how interpolation has been done is issued from boundary interpolation parameter determining means 1101 as the parameter of interpolation method of the boundary area. Likewise, the extracting method (the range from boundary line, etc. ) of extracting the boundary area by the boundary extracting means 901 is issued as a boundary extracting method signal 1103.

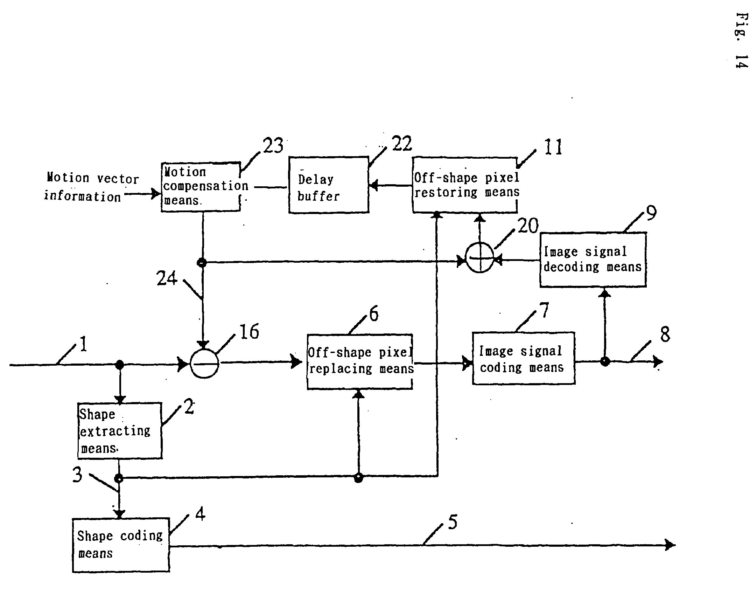

Fig. 13 shows an image decoding apparatus for decoding the image signal coded in Fig. 11, and same as in Fig. 10, an in-shape pixel coding signal 701 is entered, and a constant value is decoded in the in-shape pixel decoding means 702.

On the other hand, feeding a shape coded signal 605, the object shape information is decoded in the shape decoding means 606, and from this shape information and decoded constant value, the in-shape pixel value is replaced by the decoded constant value and issued by the in-shape pixel restoring means 703.

Besides, a boundary extracting method signal 1304 is entered, and from the object shape information from the shape decoding means 606, the boundary area is decoded in the boundary extracting means 901, and in the boundary interpolating means 1302, the boundary area is interpolated together with the parameter 1301 of the interpolating method, and the decoded image 1303 is issued.

In this method, in the case that can be simplified depending on the feature of the image including the boundary area, coding can be processed in a simpler method, so that high efficiency coding may be achieved.

### (Embodiment 6)

This embodiment relates to a coding apparatus for coding a transmissivity signal of a moving picture, by generating a predicted image by compensating the motion from the reference signal held in the delay buffer same as in the MPEG system, and coding the differential value of the predicted image and input image.

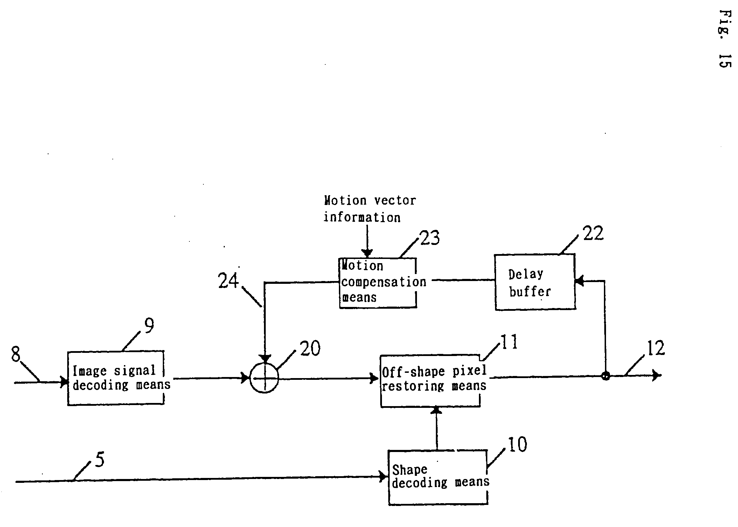

Fig. 14 is a block diagram showing a basic constitution of an image coding apparatus in embodiment 6, and in the diagram, same signals and blocks having same functions as in embodiments 1 to 5 are identified with same reference numerals, and detailed descriptions are omitted. A delay buffer 22 is means for holding the reference image issued by the adder 20. Motion compensation means 23 is means for receiving motion vector information and reference image, and compensating the motion on the basis of the motion vector information, and issuing as predicted image 24.

In thus constituted image coding apparatus of embodiment 6, the operation is described below only in the portions different from embodiment 1. In the first place, the difference between the image signal 1 and predicted image 24 is calculated in the differential means 26, and this differential value is coded same as in embodiment 1 by the off-shape pixel replacing means 16 and image signal coding means 7.

As a result of coding, the image coded signal 8 is decoded in the image signal decoding means 9. Since this decoded image is a decoded signal of the differential value, it is summed up with the predicted image 24 entered in the differential means 26 by the adder 16, and the off-shape pixel value is returned to 0 again in the off-shape pixel restoring means 11, and a perfect decoded image is created. This decoded signal is used as reference signal for decoding next image.

Generation of reference image from decoded image is for matching of the reference image with the decoding apparatus side, and at the decoding apparatus side, too, it is necessary to decode the image by processing with the same value as in the image signal decoding means 9, adder 16, and off-shape pixel restoring means 11. The new reference image is held in the delay buffer 22, and this image is compensated for motion in the motion compensation means 23 at the time of coding of next image to become a predicted image. The coding apparatus issues the image coded signal 8 and shape coded signal 5 as coded signals.

Alternatively, the reference image as the output from the off-shape pixel restoring means 11 may be replaced with an off-shape pixel in the same manner as in the off-shape pixel replacing means 11 so as not to contain high frequency component in the object region boundary area of the reference image, and then the predicted image may be created.

In this embodiment, meanwhile, only reference image was held in the delay buffer 22, but as in the MPEG system, a plurality of images may be held, and a predicted image may be created from the reference image before or after, or before and after in time.

Thus, according to the embodiment, by coding the differential value with the reference image, efficient coding is realized also in coding of moving picture.

### (Embodiment 7)

As embodiment 7, an image decoding apparatus is described while referring to Fig. 15. Fig. 15 is a block diagram showing a basic constitution of the image decoding apparatus in embodiment 7 of the invention, and in the diagram, the same signals and blocks having the same functions as in embodiments 1 through 6 are identified with same reference numerals, and their description is omitted. The image decoding apparatus of the embodiment is for decoding the image signal coded by the image coding apparatus in Fig. 14.

In thus constituted image decoding apparatus of embodiment 7, the operation is described below only for the portions different from embodiment 2. The image coded signal 8 coding the differential value from the predicted image is decoded in the image decoding means 9, and the decoded differential signal is added to the predicted image 23 by the adder 20. In the off-shape pixel restoring means 11, the off-shape pixel of the output image of the adder 20 is returned to 0, and is issued from the decoding apparatus as a decoded signal 12.

On the other hand, the decoded signal 12 is held in the delay buffer 22 as reference image, and when decoding the next image, the reference image held in the delay buffer 22 is compensated of motion in the motion compensation means 23, and is issued as new predicted image 24.

Incidentally, if the off-shape pixel value of the reference image is replaced at the coding apparatus side, in the decoding apparatus of the embodiment, it is necessary to replace the off-shape pixel of reference image in the same method.

In the embodiment, only reference image was held in the delay buffer, but as in the MPEG system, a plurality of images may be held, and a predicted image may be created from the reference image before or after, or before and after in time.

Thus, according to the embodiment, the signal coded by the image coding apparatus of embodiment 6 can be correctly decoded.

### (Embodiment 8)

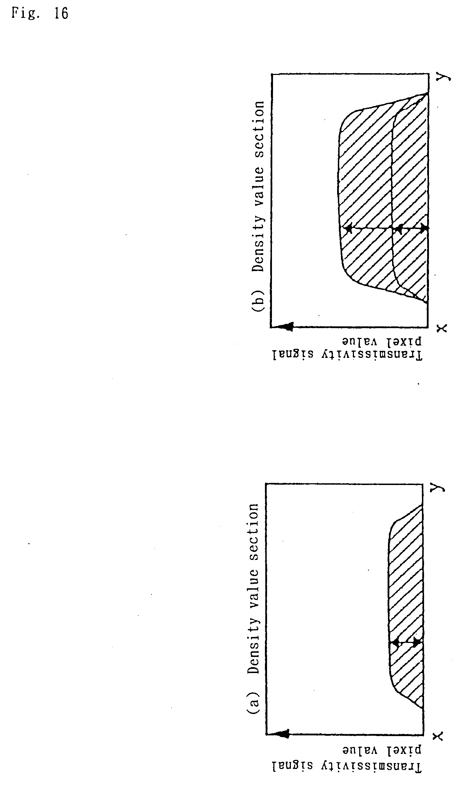

Fig. 16 is a conceptual diagram of image coding according to embodiment 8 of the invention.

Fig. 16 (a) shows a density section of reference image, and Fig. 16 (b) shows a density section of the image to be coded. In a moving picture, when the entire object region is changed from translucent to opaque state, or, to the contrary, from opaque to translucent state, the pixel value of a transmissivity image at a certain point may be expressed by the ratio to the pixel value of reference image at other point. Not only as transmissivity image, but also in ordinary image, the brightness change can coded by using the ratio of the brightness (luminance).

That is, in the pixel value of the image as in Fig. 16 (a), it is a case in which the pixel value of the image to be coded is a constant multiple as in Fig. 16 (b). At this time, by coding only the ratio of pixel value and shape information and issuing, efficient coding is realized. Or, the image of a constant multiple of the pixel value of reference image is used as predicted, value, and the difference from the input image may be coded.

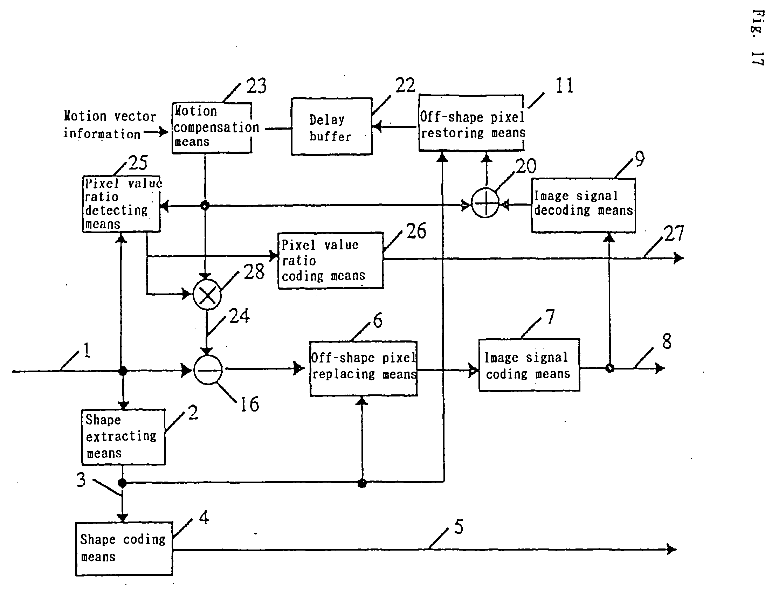

Fig. 17 is a block diagram showing a basic constitution of an image coding apparatus in embodiment 8, and in this diagram, same signals and blocks having same function as in embodiments 1 through 7 are identified with same reference numerals, and detailed description is omitted. Pixel ratio detecting means 25 is means for detecting the ratio of the reference image to the pixel value of the image to be coded. Pixel ratio coding means 26 is means for coding the ratio of detected pixel value and issuing as a pixel ratio coded signal 27. Multiplier 28 is means for multiplying the pixel value of the image by a given ratio.

In thus constituted image coding apparatus of embodiment 7, the operation is described below only for the portions different from embodiment 6. The pixel ratio detecting means 25 compares the reference image held in the delay buffer 22 and the pixel value of the entered image signal 1, and determines the ratio of the pixel values of both images. This ratio of pixel values is coded in the pixel ratio coding means 26, and is issued as a pixel ratio coded signal 27.

In this embodiment, the example in coding by using the predicted image mentioned in embodiment 6 is described, but this method may be also applied in the case of determining the predicted image in the case of predicting and coding without using shape information.

Thus, according to the embodiment, the image changing in the value of pixel in the entire shape can be efficiently coded.

### (Embodiment 9)

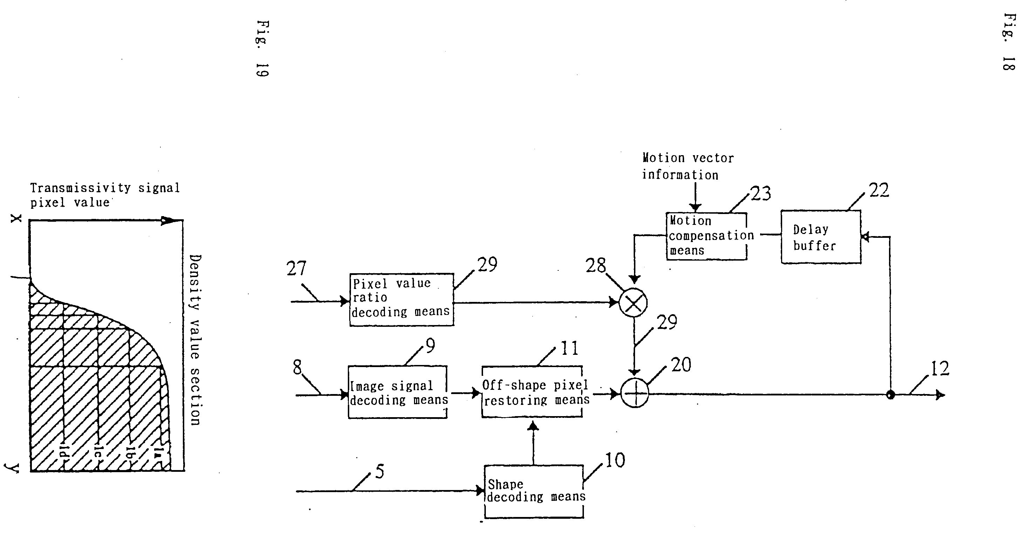

As embodiment 9, an image decoding apparatus is described by reference to Fig. 18. Fig. 18 is a block diagram showing a basic constitution of the image decoding apparatus in embodiment 9 of the invention, and in this diagram, same signals and blocks having same function as in embodiments 1 through 8 are identified with same reference numerals, and detailed description is omitted. The image decoding apparatus of the embodiment is for decoding image signal coded by the image coding apparatus in Fig. 18. Pixel ratio decoding means is means for decoding the pixel ratio coded signal.

In thus constituted image coding apparatus of embodiment 9, the operation is described below only for the portions different from embodiment 7. The pixel ratio decoding means 29 decodes the ratio of the pixel values of the reference image and the image to be decoded. By multiplying the decoded pixel ratio by the pixel value of the reference image held in the delay buffer 22 by the multiplier 28, a predicted image can be created.

In this embodiment, the example in coding by using the predicted image mentioned in embodiment 6 is described, but this method may be also applied in the case of determining the predicted image in the case of predicting and coding without using shape information.

Thus, in the embodiment, the signal coded in the image coding apparatus in embodiment 8 can be decoded correctly.

### (Embodiment 10)

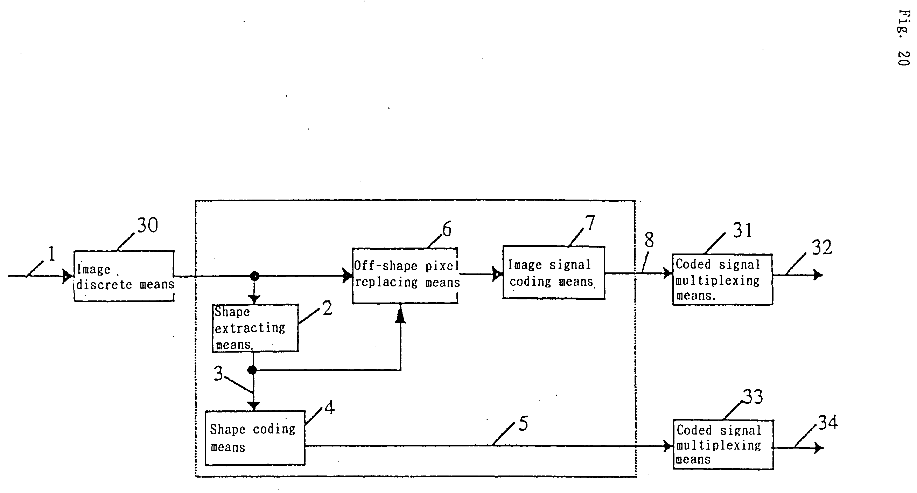

Fig. 19 is a conceptual diagram of an image coding apparatus of embodiment 9 of the invention. Fig. 19 shows a density section near the object region boundary area in an input image signal, and 1a to 1d in Fig. 19 denote the discrete states of image depending on the density.

As shown in Fig. 19, the image can be made discrete by representative density values (1a to 1d), and the discrete images can be stratified by expressing each layer by the value of representative density and region shape. By coding each layer by, for example, the coding apparatus in embodiment 1 and multiplexing and issuing the coded signal of each layer, the image can be coded.

Besides, when the required coding bit rate is low, by coding only the layer of 1a, and coding 1a to 1b selectively depending on other coding bit rate, scalability of coding depending on the bit rate may be realized easily.

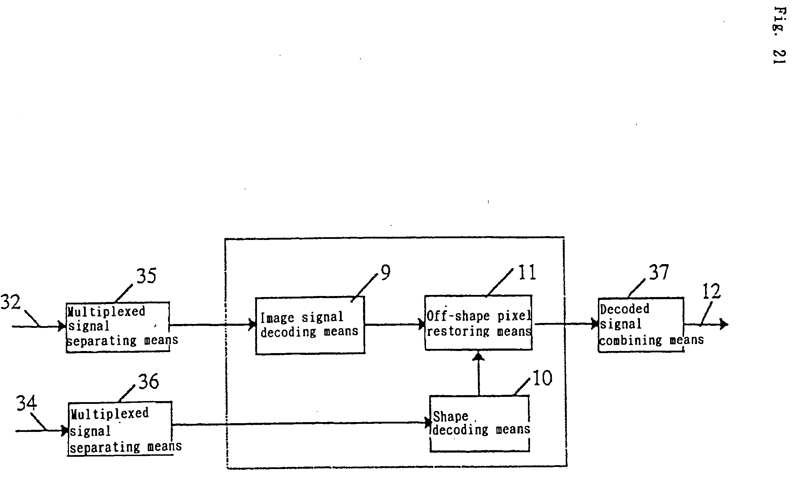

Fig. 20 is a block diagram showing a basic constitution of the image coding apparatus in embodiment 10, in the diagram, the same signals and blocks having the same functions as in embodiments 1 to 9 are identified with same reference numerals, and detailed description is omitted. Image discrete means 30 is means for making discrete the image signal 1, and stratifying depending on the density value. Multiplexing means 31 is means for multiplexing the image coded signal of each layer and issuing as a multiplexed image coded signal 32. Multiplexing means 33 is means for multiplexing the shape coded signal of each layer, and issuing as a multiplexed shape coded signal 34.

In thus constituted image coding apparatus of embodiment 10, the operation is described below only for the portions different from embodiment 1. The image signal 1 is made discrete by the image discrete means 30 (for example, by quantizing process), and is stratified by the discrete level value and binary region (for example, region of 1 if more than discrete level value, and 0 otherwise). Coding is effected on the image in each layer, and at this time, as mentioned in embodiment 1, the coding method of image being a constant pixel value inside of the shape may be employed. The coded signal of each layer is multiplexed in the coded signal multiplexing means 31, 33, and issued as multiplexed image coded signal 32 and multiplexed shape coded signal 34.

The multiplexing method of discrete level in the coded signal multiplexing means 31 of image coded signal includes a method of sending absolute values of discrete level in an arbitrary order by coding, and a method of sending sequentially from the layer of the lowest discrete level by coding the differential value of the discrete level values.

Thus, in this embodiment, by processing the image signal hierarchically, the scalability depending on the coding bit rate can be realized easily.

### (Embodiment 11)

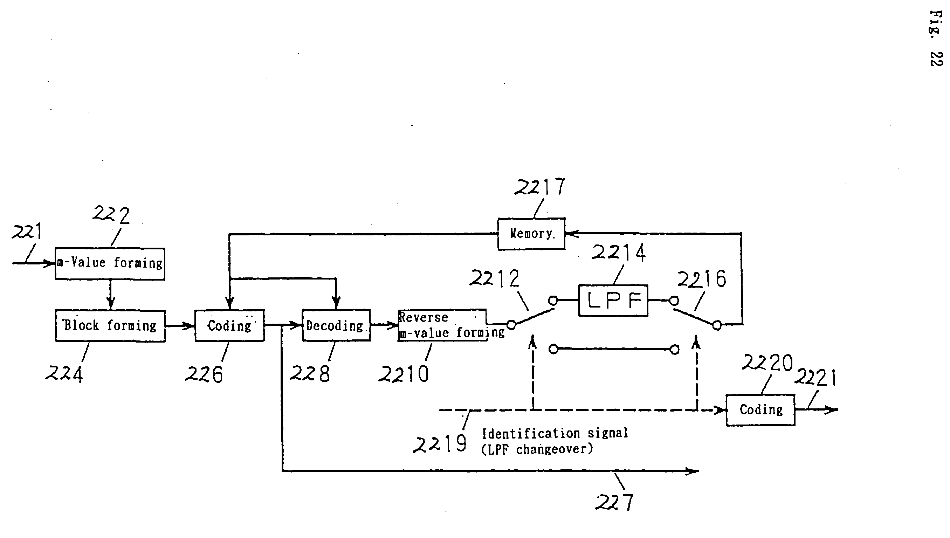

As embodiment 11, an image decoding apparatus is described by reference to Fig. 21. Fig. 21 is a block diagram showing a basic constitution of the image decoding apparatus in embodiment 11 of the invention, and in this diagram, same signals and blocks having same function as in embodiments 1 through 10 are identified with same reference numerals, and detailed description is omitted. The image decoding apparatus of the embodiment is for decoding image signal coded by the image coding apparatus in Fig. 20.

Fig. 21 is a block diagram showing a basic constitution of the image decoding apparatus in embodiment 11, in the diagram, the same signals and blocks having the same functions as in embodiments 1 to 10 are identified with same reference numerals, and detailed description is omitted. Multiplexed signal separating means 35 is means for separating the multiplexed image coded signal 32 into image coded signals of individual layers, and multiplexed signal separating means 36 is means for separating the multiplexed shape coded signal 34 into shape coded signals of individual layers. Decoded image combining means 37 is means for combining the decoded images of individual layers and issuing as a decoded image 12.

In thus constituted image decoding apparatus of embodiment 11, the operation is described below only for the portions different from embodiment 2. The multiplexed image coded signal 32 and multiplexed shape coded signal 34 are separated into coded signals of layers by the multiplexed signal separating means 35 and 36, respectively. Consequently, the coded signals of layers are decoded into decoded images of layers in reverse decoding of the coding apparatus in embodiment 10. The decoded images of layers are combined into a decoded image of each layer by the decoded image combining means 37.

Meanwhile, as the multiplexing method of discrete level of multiplexed image decoded signal 36, in the method of sending absolute values of discrete level in an arbitrary order by coding, at the decoding apparatus side, by overlaying the decoded images of discrete levels, the decoded image can be obtained by selecting the value of the largest discrete level among the pixels at the same position of each layer. In the method of sending sequentially from the layer of the lowest discrete level by coding the differential value of the discrete level values, the decoded image can be obtained by adding the decoded image of each discrete level at the decoding apparatus side.

Thus, in the embodiment, the signal coded in the image coding apparatus in embodiment 10 can be decoded correctly.

### (Embodiment 12)

Fig. 22 is a block diagram of an image coding apparatus in embodiment 12 of the invention. In the diagram, reference numeral 221 is an input image signal, 222 is an m-value forming device for forming the image signal into an m-value, 224 is a block forming device for forming the m-value signal into blocks, 226 is an encoder for coding a block signal and issuing a coded signal 227, 228 is a decoder for decoding the coded signal, 2210 is a reverse m-value forming device for converting an m-value signal into a multiple-value signal, 2212 is a switch, 2214 is a low pass filter (LPF) for filtering in block unit, 2216 is a switch, 2217 is a memory, 2219 is an identification signal for changing over the switches 2212 and 2216, and 2220 is an encoder for coding the identification signal 2216 and issuing a coded signal 2221.

In thus constituted embodiment 12, the operation is described below. The image signal is converted from a multi-value signal to an m-value signal in the m-value forming device 222. The m-value forming device is a device for quantizing with m quantizing points, and its output has m values. The block forming device 224 gathers several m-value pixels each and composes into one block. The encoder 226 encodes the output of the block forming device 224 by referring to the decoded pixel values stored in the memory 2218, and obtains a coded signal 227.

The decoder 228 decodes the coded signal 227 by referring to the decoded pixel values stored in the memory 2217. The encoder 226 and decoder 228 in embodiment 12 have mutual converting functions of m-value and multi-value signals, and therefore discrete values can be coded efficiently by using the m-value signal entered in the encoder 226, and the multi-value pixel values of the memory 2217 to be referred to in the encoder 226 and decoder 228. The reverse m-value forming device 2210 converts the decoded m-value signal into a pixel value.

Fig. 22 is an explanatory diagram of the operation of embodiment 12. In Fig. 22, the portion of a cat (a natural image) is supposed to have continuous pixel values, while the portion of LOGO (a computer image) to have discrete values. When both pixel values are issued as discrete values, an aliasing distortion which is visually disturbing appears in the portion of the natural image having continuous pixel values by nature, and on the other hand when the pixel values are all converted into continuous values by LPF, the sharp edge created by the computer becomes dull, and an unclear image is produced.

Therefore, by delivering discrete blocks directly in discrete pixel values, and interpolating discrete pixel values by the LPF only in the shaded area to deliver as continuous pixel values, the picture quality of the shaded block can be enhanced without deteriorating the sharpness of the block of the discrete pixel values.

The switches 2212 and 2216 change over whether to change the discrete value into continuous value or not by the LPF 2212 in block unit depending on the identification signal 2219 entered from outside. The output of the switch 2216 is stored in the memory 2217, and is used in coding and decoding of subsequent image signals. The identification signal is coded by the encoder 2220 to be a coded signal 2221.

As explained herein, according to embodiment 12, by forming into m-value by the m-value forming device 222, the discrete value can be efficiently coded by the encoder 226, and by converting into continuous value only in the block where the continuous value is desired by the switches 2212, 2216 and LPF 2214, deterioration of picture quality can be prevented in the pixel values of the natural image composed of continuous values.

### (Embodiment 13)

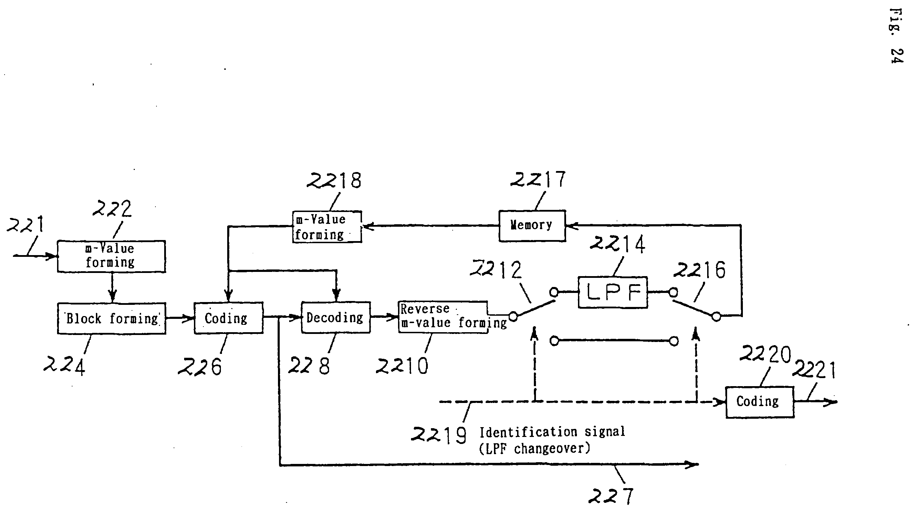

Fig. 24 is a block diagram of an image coding apparatus in embodiment 13. Embodiment 13 is almost same as embodiment 12 in Fig. 22, except that the output of the memory 2217 is connected to the m-value forming device 2218.

If the encoder 226 and decoder 228 process by the m-value only, processing is simpler when all inputs of the encoder 226 and decoder 228 are formed in m-values. Owing to this reason, in embodiment 13, the output of the memory 2217 is formed into m-value in the m-value forming device 2218, so that all inputs to the encoder 226 and decoder 228 are m-values.

### (Embodiment 14)

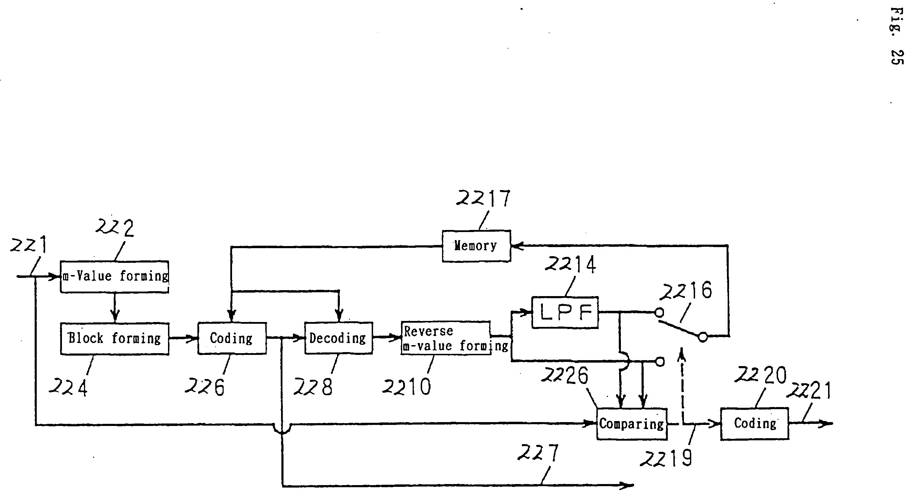

Fig. 25 is a block diagram of an image coding apparatus in embodiment 14. Embodiment 14 is almost same as embodiment 12 in Fig. 22, except that the switch 2212 is omitted, and that the identification signal 2219 is created in a comparator 2226.

As the switch 2212 is omitted, the output of the reverse m-value forming device 2210 is always processed in the LPF 2214. The comparator 2226 compares the output of the reverse m-value forming device 2210 and the output of the LPF 2214 with the image signal 221, and issues an identification signal 2219 so that the one smaller in difference from the image signal 221 may be the, output of the switch 2216. As a result, the output of the switch 2216 of the block, that is, the pixel value to be decoded is always a value close to the input signal 221, so that the picture quality may be enhanced.

### (Embodiment 15)

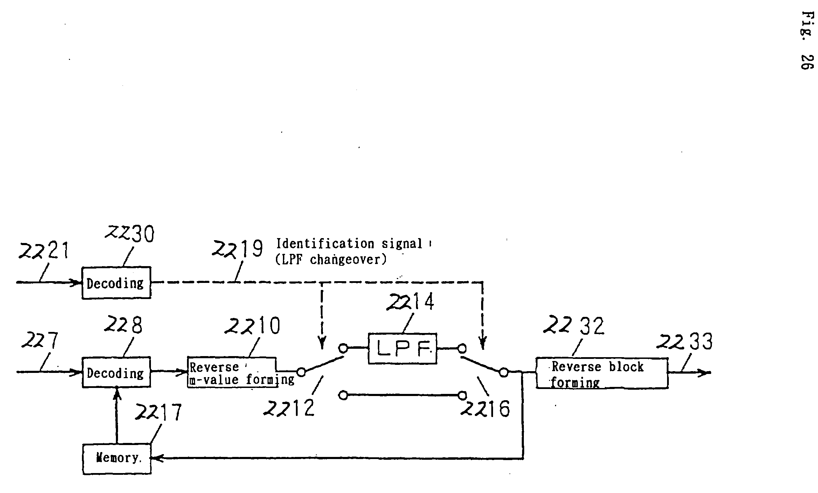

Fig. 26 is a block diagram of an image decoding apparatus in embodiment 15 of the invention. In the diagram, the devices having same functions as in embodiment 12 in Fig. 22 are identified with same reference numerals, and their description is omitted. Reference numeral 2230 is a decoder for decoding the identification signal 2219, and 2232 is a reverse block forming device for integrating the output of the switch 2216 and issuing a decoded signal 2233.

In thus constituted embodiment 15, the operation is described below. The decoder 2230 decodes the coded signal 21, and issues an identification signal 2219. The operation from the decoder 228 to the switch 2216 is same as in embodiment 12. Since the output of the switch 2216 is formed into blocks, by integrating the block pixels in the reverse block forming device 2232, a decoded signal 2233 is composed as a decoded image signal.

As explained herein, according to embodiment 15, having the portion relating to decoding in embodiment 12 and the reverse block forming device 2232, the coded signal coded in embodiment 12 can be decoded correctly.

### (Embodiment 16)

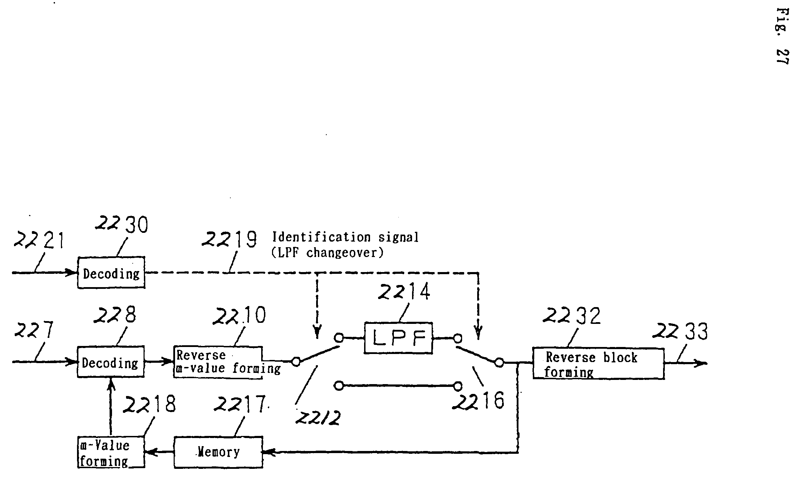

Fig. 27 is a block diagram of an image decoding apparatus in embodiment 16. Embodiment 16 is almost same as embodiment 15 in Fig. 26, except that the output of the memory 2217 is connected to the m-value forming device 2218.

Same as in embodiment 13 shown in Fig. 24, if the decoder 228 processes by the m-value only, processing is simpler when all inputs of the decoder 228 are formed in m-values. Owing to this reason, in embodiment 16, the output of the memory 2217 is formed into m-value in the m-value forming device 2218, so that all inputs to the decoder 228 are m-values.

### (Embodiment 17)

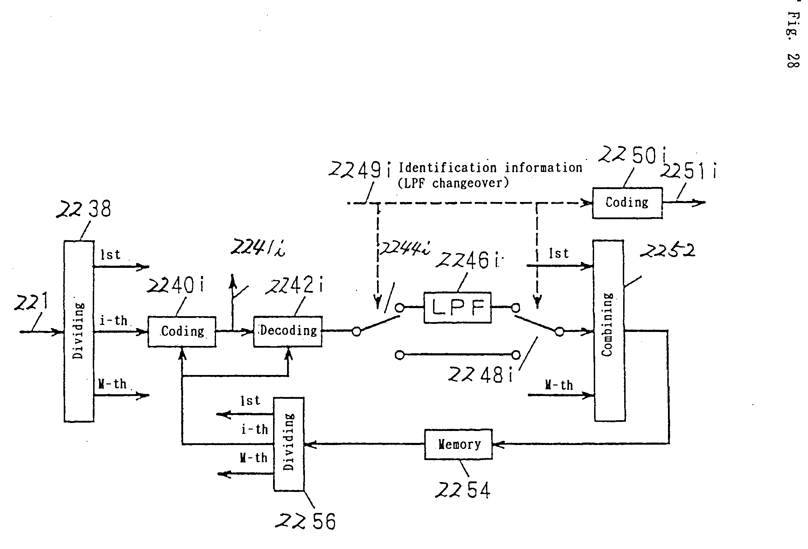

Fig. 28 is a block diagram of an image coding apparatus in embodiment 17 of the invention. In the diagram, reference numeral 221 is an input image signal, 2238 is a divider for dividing the image signal 221 into m signals, 2240i is an encoder for coding a divided i-th signal and issuing a coded signal 2241i, 2242i is a decoder for decoding the coded signal, 2244i is a switch, 2246i is a low pass filter (LPF), 2248i is a switch, 2252 is a blender for combining m outputs of the switch 2246i and generating a decoded image signal, 2254 is a memory for storing the output of the blender 2252, 2256 is a divider for dividing the output of the memory 2248i into m signals, 2249i is an identification signal for changing over the switches 2244i, 2248i, and 2250i is an encoder for coding the identification signal 2249i and issuing a coded signal 2251i.

In thus constituted embodiment 17, the operation is described below. The image signal is divided into m signals in the divider 2238. This division may be spatial division or time division of image signal, or amplitude division of pixel value. Of course, it is also possible to separate into each object in the image. Processing from the encoder 2240i to the switch 2248i, and processing of the encoder 2250i are done similarly in each one of m signals, and hence only the i-th signal is described below. The encoder 2240i encodes the i-th signal of the divider 2238 to obtain a coded signal 2241i, by referring to the signal corresponding to the i-th signal having the decoded pixel value recorded in the memory 2254 divided by the divider 2256.

The decoder 2242i, similarly, decodes the coded signal 2241i by referring to the i-th signal of the divider 2256. The switches 2244i and 2248i change over whether to deliver the result processed by the LPF 2246i or to deliver the result not being processed, depending on the identification signal 2249i. That is, it is the changeover whether to process by LPF in every one of m divided signals or not, and the LPF processing can be done only on the signals that are enhanced in picture quality by LPF processing. The outputs of the switch 2248i are collected as many as m in the blender 2252, and stored in the memory 2254 as coded image signal, and used in coding and decoding of subsequent image signals. Meanwhile, the identification signal is coded by the encoder 2250i to be a coded signal 2251i.

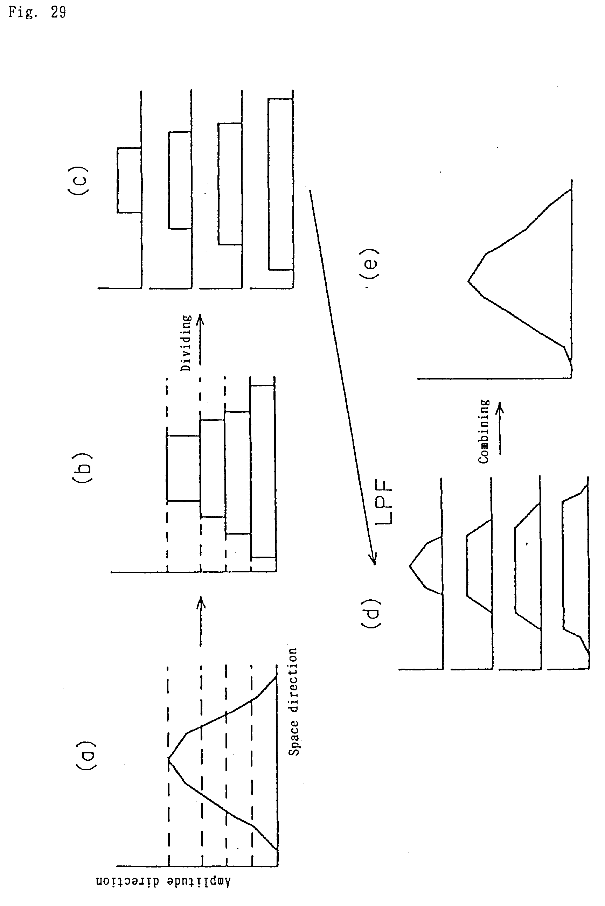

Fig. 29 is an explanatory diagram of an example of, coding by dividing into four sections in the amplitude direction of the pixel value. The input image signal which is composed of continuous values (Fig. 29 (a)) is quantized by a quintuple value in the amplitude direction of the divider 2238, and is divided into four sections from Fig. 29 (b) to Fig. 29 (c). Each one of the divided signals is coded as a binary signal, and is converted into a continuous value in each signal by the LPF (Fig. 29 (d)). The blender 2252 sums up the signals of continuous values (Fig. 29 (e) to obtain a decoded image signal. In this way, in spite of binary coding, the continuos values of complicated shape can be decoded.

As described herein, according to embodiment 17, by changing over presence or absence of LPF processing in every one of m signals divided by the divider 2238, only the signals improved in picture quality by LPF processing can be processed by LPF, so that the picture quality may be enhanced. If there is character or the like processed by CG in any image signal, LPF processing can be skipped in such signal, so that contour blurring of character or the like can be avoided.

In embodiment 17, in the encoder 2240i and decoder 2242i, the i-th signal of the divider 2256 is referred to, but coding and decoding may be also done by referring directly to the content of the memory 2254. Alternatively, by forming into blocks by the divider 2238 or divider 2256, changeover of the LPF 2246i may be done in every block.

### (Embodiment 18)

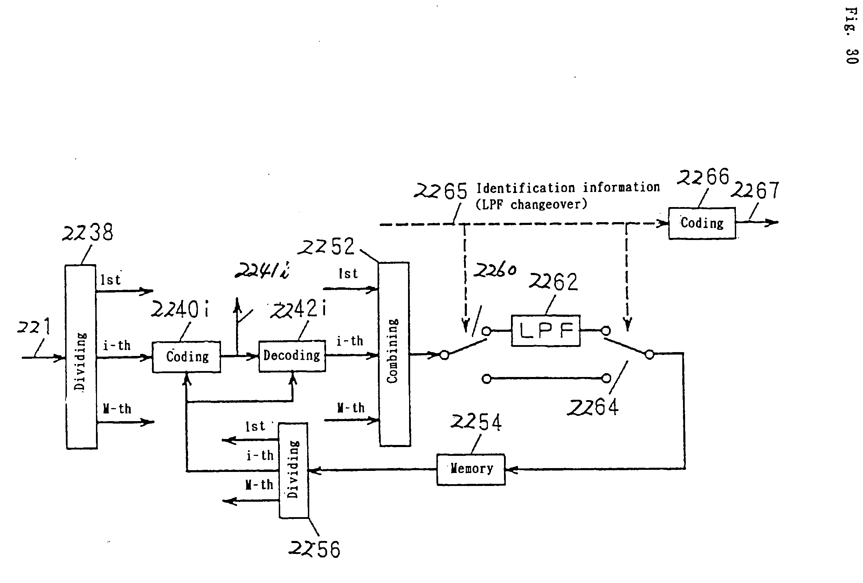

Fig. 30 is a block diagram of an image coding apparatus in embodiment 18 of the invention. In the diagram, the devices having the same functions as in embodiment 17 shown in Fig. 28 are identified with same reference numerals. Reference numeral 2252 is a blender for combining and delivering m outputs of the decoder 2242i, 2260 is a switch, 2262 is a low pass filter (LPF), 2264 is a switch, 2254 is a memory for storing the output of the switch 2264, 2265 is an identification signal for changing over the switches 2260 and 2264, and 2266 is an encoder for coding the identification signal 2265 and issuing a coded signal 2267.

In thus constituted embodiment 18, the operation is described below only for portions different from embodiment 17. The difference between embodiment 18 and embodiment 17 is that the LPF processing is done after combining in embodiment 18 while the LPF processing is done before combining in embodiment 17. Although, in embodiment 18, it is impossible to control to change over LPF processing in every signal as in embodiment 17, the identification information is small in quantity, so that the number of coding bits can be saved. The switches 2260 and 2264 change over whether to produce the result processed by the LPF 2262 or to produce the result being not processed, depending on the identification signal 2265. The output of the switch 2264 is used in coding and decoding of subsequent image signals. The identification signal is coded by the encoder 2266 to be a coded signal 2267.

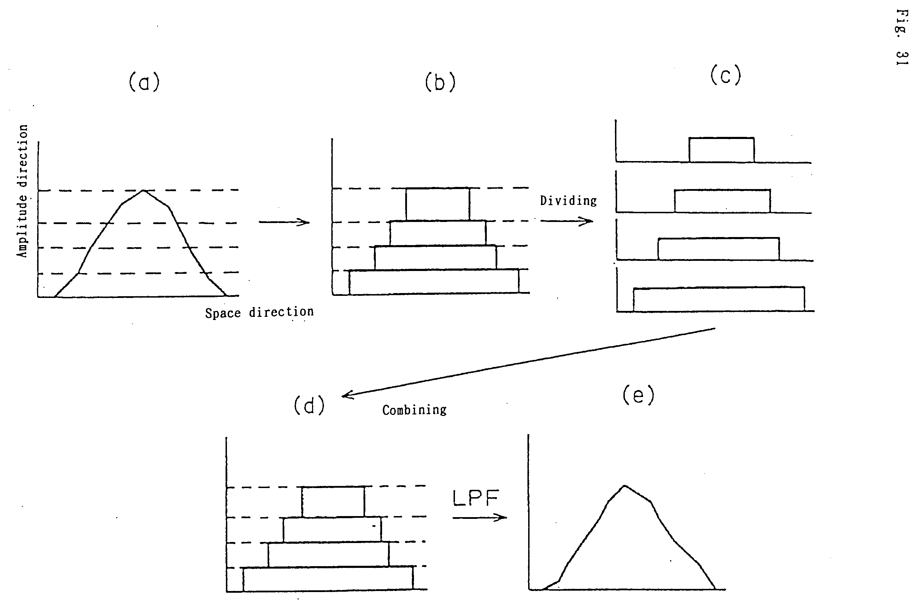

Fig. 31 is an explanatory diagram of an example of, coding by dividing into four sections in the amplitude direction of the pixel value. The input image signal which is composed of continuous values (Fig. 31 (a)) is quantized by a quintuple value in the amplitude direction of the divider 2238, and is divided into four sections from Fig. 31 (b) to Fig. 31 (c). Each one of the divided signals is coded as a binary signal, and is combined in the blender 2252 (Fig. 31 (d)). The output of the blender 2252 is converted into continuous values in the LPF (Fig. 31 (e)) to be a coded image signal. In this way, in spite of binary coding, the continuos values of complicated shape can be decoded.

As described herein, according to embodiment 18, by changing over presence or absence of LPF processing by combining the coded and decoded signals by dividing into m signals in the divider 2238, only the signals improved in picture quality by LPF processing can be processed by LPF, so that the picture quality may be enhanced. If there is character or the like processed by CG in any image signal, LPF processing can be skipped in such signal, so that contour blurring of character or the like can be avoided.

In embodiment 18, in the encoder 2240i and decoder 2242i, the i-th signal of the divider 2256 is referred to, but coding and decoding may be also done by referring directly to the content of the memory 2254.

### (Embodiment 19)

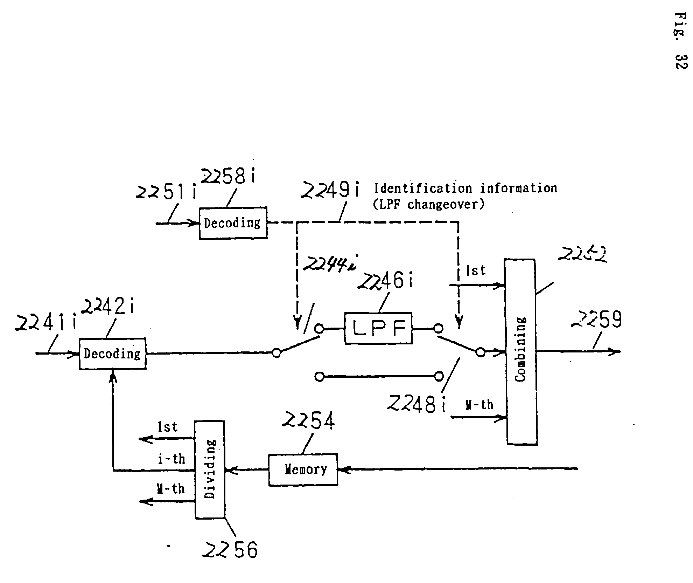

Fig. 32 is a block diagram of an image decoding apparatus in embodiment 19 of the invention. In the diagram, devices having the same functions as in embodiment 17 in Fig. 28 are identified with same reference numerals, and their description is omitted. Reference numeral 2258i is a decoder for decoding an identification signal 2249i, and 2259 is a decoded signal.

In thus constituted embodiment 19, the operation is described below. The decoder 2258i decodes the coded signal 2251i, and issues an identification signal 2249i. The operation from the decoder 2242i to the blender 2252 is same as in embodiment 17, and the output of the blender 2252 is a decoded signal 2259, that is, a decoded image signal.

As described herein, according to embodiment 19, having the portion relating to decoding in embodiment 17, the coded signal coded in embodiment 17 can be decoded correctly.

In embodiment 19, in the decoder 2242i, the i-th signal of the divider 2256 is referred to, but coding and decoding may be also done by referring directly to the content of the memory 2254. Alternatively, by forming into blocks by the divider 2256, changeover of the LPF 2246i may be done in every block.

### (Embodiment 20)

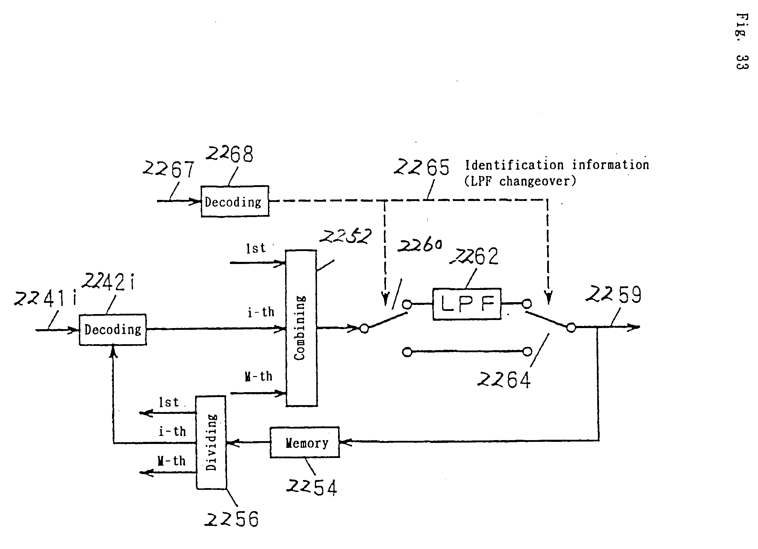

Fig. 33 is a block diagram of an image decoding apparatus in embodiment 20 of the invention. In the diagram, devices having the same functions as in embodiment 18 in Fig. 30 are identified with same reference numerals, and their description is omitted. Reference numeral 2268 is a decoder for decoding an identification signal 2265, and 2259 is a decoded signal.

In thus constituted embodiment 20, the operation is described below. The decoder 2268 decodes the coded signal 2267, and issues an identification signal 2265. The operation from the decoder 2242i to the switch 2264 is same as in embodiment 18, and the output of the switch 2264 is a decoded signal 2259, that is, a decoded image signal,

Thus, according to embodiment 20, having the portion relating to decoding in embodiment 18, the coded signal coded in embodiment 18 can be decoded correctly.

In embodiment 20, in the decoder 2242i, the i-th signal of the divider 2256 is referred to, but coding and decoding may be also done by referring directly to the content of the memory 2254.

### (Embodiment 21)

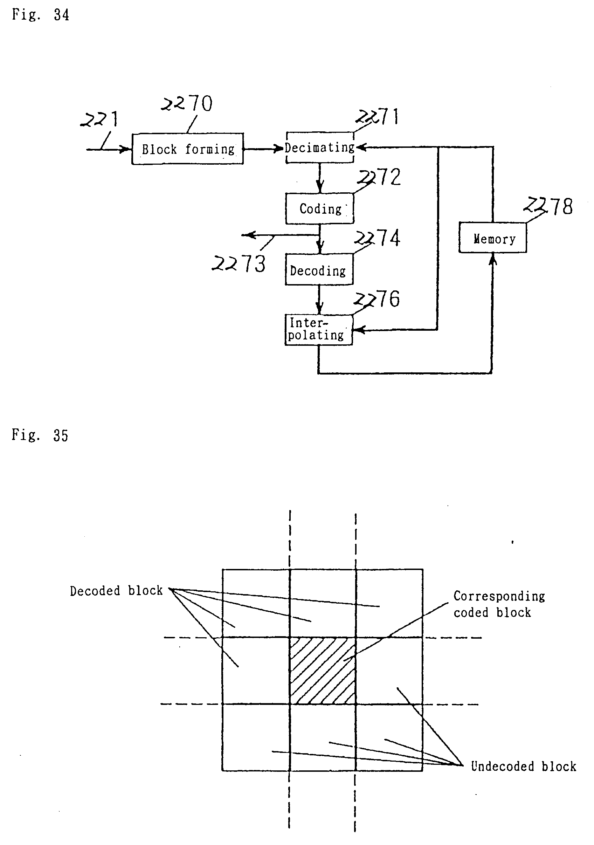

Fig. 34 is a block diagram of an image coding apparatus of embodiment 21 of the invention. In the diagram, reference numeral 221 is an input image signal, 2270 is a block forming device for forming the image signal 221 into blocks, 2271 is a pixel decimating device for decimating (sub-sampling) blocks of signals, 2272 is an encoder for coding and issuing a coded signal 2273, 2274 is a decoder for decoding the coded signal, 2276 is a pixel interpolating device for interpolating the decoded signal, and 2278 is a memory.

In thus constituted embodiment 21, the operation is described below. The block forming device 2270 gathers several pixels each of the image signal 221, and forms one block. The pixel decimating device 2271 refers to the memory 2278 if there is a decoded pixel near the block, and, if there is no decoded pixel, it predicts and generates a nearby pixel value from the pixel value of the block, and processes by decimating. The decimating process has a great effect on curtailment the number of coded bits in the subsequent encoder, but if the decimating process is conducted only on the pixel values within the block, distortion of decimating process is concentrated in the block boundary, thereby causing a block distortion, which is a significant deterioration visually. Therefore, when decimating in block unit, it is necessary to limit the frequency band or the like for erasing the aliasing distortion by referring also to the pixel value near the block.

Fig. 35 is an explanatory diagram of the pixel to be referred to by the pixel decimating device 2271. Coding is effected sequentially from the upper left block to the lower right block, and the peripheral blocks of the block to be coded are mixed with decoded blocks and undecoded blocks as shown in Fig. 35.

When decimating the block to be coded, a decoded block can be referred to, but an undecoded block cannot be referred to, and therefore the pixel value of the undecoded block is predicted and generated by the pixel value of the block to be coded.

By decimating the pixels mainly in the block to be coded constituted in this way and cutting out only the region corresponding to the block to be coded, the decimated pixel value of the block to be coded is obtained. The encoder 2272 encodes the output of the decimating device 2271, and obtains a coded signal 2273.

The decoder 2274 decodes the coded signal 2273. The pixel interpolating device 2276 refers to the memory 2278 if there is a decoded pixel near the block same as the pixel decimating device 2271, and, if there is no decoded pixel, it predicts and generates a nearby pixel value from the pixel values of the block, and interpolates. The output of the pixel interpolating device 2276 is stored in the memory 2278 and is used in decimating and interpolating of subsequent image signals.

As described herein, according to embodiment 21, if the decoded pixel values can be referred to by the pixel decimating device 2271 and pixel interpolating device 2276, by referring to, decimating pixels and interpolating pixels, if decimated and interpolated in block units, occurrence of block distortion can be prevented.

### (Embodiment 22)

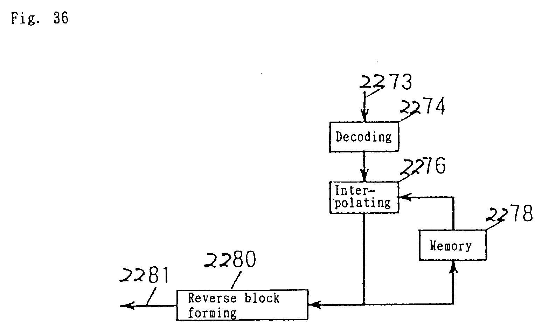

Fig. 36 is a block diagram of an image decoding apparatus in embodiment 22 of the invention. In the diagram, devices having the same functions as in embodiment 21 in Fig. 34 are identified with same reference numerals, and their description is omitted. Reference numeral 2280 is a reverse block forming device for integrating the interpolated pixel values to obtain an image signal, and 2259 is a decoder.

In thus constituted embodiment 22, the operation is described below. The other devices than the reverse block forming device 2280 are same as in embodiment 21. Since the signal interpolated of pixel in the pixel interpolating device 2276 has been formed into block, the reverse block forming device 2280 integrates the blocks, and produces a decoded signal 2281 as a decoded image signal.

As described herein, according to embodiment 22, having the portion relating to decoding of embodiment 21, the coded signal coded in embodiment 21 can be decoded correctly.

### (Embodiment 23)

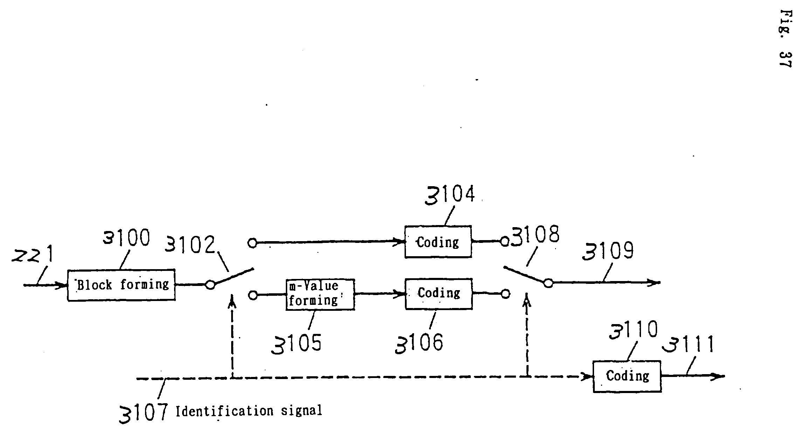

Fig. 37 is a block diagram of an image coding apparatus in embodiment 23 of the invention. In the diagram, reference numeral 221 is an input image signal, 3100 is a block forming device for forming the image signal 221 into blocks, 3102 is a switch, 3104 is an encoder for directly coding the output of the block forming device 3100, 3105 is an m-value forming device for forming the output of the block forming device 3100 into an m-value, 3106 is an encoder for coding the m-value signal, 3108 is a switch for issuing a coded signal 3109, and 3110 is an encoder for coding an identification signal 3107 and issuing a coded signal 3111.

In thus constituted embodiment 23, the operation is described below. The block forming device 3100 gathers several pixels each of the image signal 221 and forms one block. The image signal is composed of, as mentioned above, a natural image having continuous pixel values and discrete pixel values. Accordingly, the block of continuous pixel values is coded by the encoder 3104, and the block of discrete pixel values is formed into m-value,by the m-value forming device 3105, and the coding the m-value in the decoder 3106, both continuous pixel values and discrete pixel values can be coded efficiently. The switches 3102 and 3108 select either encoder 3104 or encode 3106, depending on the identification signal 3107 entered from outside, and a coded signal 3109 is issued as output. The identification signal 3107 is coded by the encoder 3110 to be a coded signal 3111.

Thus, according to embodiment 23, having the encoder 3104 for directly coding the blocked formed signal and the encoder 3106 for coding by forming into m-value, both continuous pixel values and discrete pixel values can be coded efficiently.

In embodiment 23, meanwhile, it is not necessarily required to form the blocks of discrete pixel values into m-value and coded by the encoder 3106, but they may be coded by the encoder 3104. To the contrary, blocks of continuous pixel values may be formed into m-value and coded.

### (Embodiment 24)

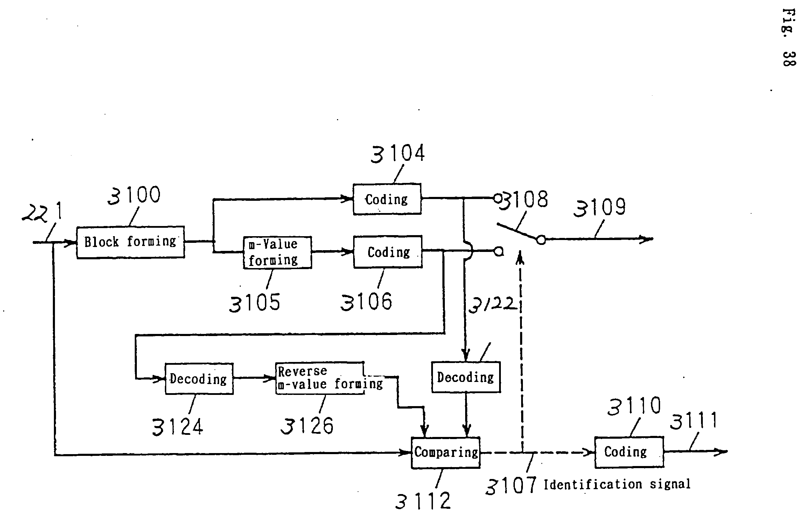

Fig. 38 is a block diagram of an image coding apparatus in embodiment 24 of the invention. In the diagram, devices having the same functions as in embodiment 23 in Fig. 37 are identified with same reference numerals. Reference numeral 3124 is a decoder for decoding a coded signal 3109 and issuing an m-value, 3126 is a reverse m-value forming device for decoding an m-value and issuing a multi-value signal, and 3112 is a comparator for generating an identification signal 3107.

In thus constituted embodiment 24, the operation is described below. The description of the operation is omitted for the same devices as in embodiment 23. The decoder 3122 decodes the output of the encoder 3104, and issues a multi-value signal. On the other hand, the decoder 3124 decodes the output of the encoder 3106, issues an m-value, and converts the m-value into a multi-value signal in the reverse m-value forming device 3126. The comparator 3112 compares the output of the decoder 3124 and the output of the reverse m-value forming device 3126 with the image signal 1, thereby generating an identification signal 3107 for selecting the one smaller in the coding error by the switch 3108. Therefore, the coded signal selected as the coded signal 3109 is always smaller in the coding error than the other, and therefore the deterioration of picture quality may be smaller than when selecting always one side.

As described herein, according to embodiment 24, an identification signal for selecting the encoder of smaller coding error can be generated, and the coding efficiency can be further enhanced from embodiment 23.

Incidentally, the comparator 3112 in embodiment 24 is supposed to select the one smaller in the coding error, but it may be also designed to select the one smaller in the number of coded bits or select by considering both the coding error and the number of coded bits.

### (Embodiment 25)

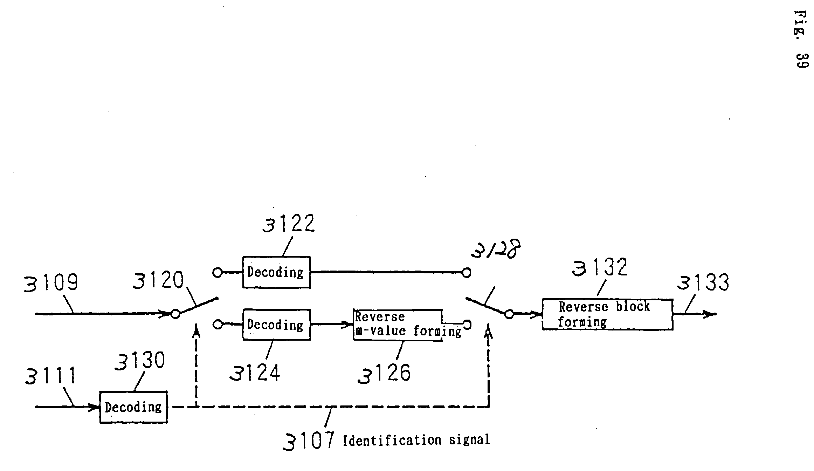

Fig. 39 is a block diagram of an image decoding apparatus in embodiment 25 of the invention. In the diagram, devices having the same functions as in embodiment 24 in Fig. 38 are identified with same reference numerals, and their description is omitted. Reference numeral 3130 is a decoder for decoding a coded signal 3111 and issuing an identification signal 3109, 3120, 3128 are switches, 3132 is a reverse block forming device for integrating the output of the switch 3128 and issuing as an image signal, and 3133 is a decoded signal.

In thus constituted embodiment 25, the operation is described below. Description of operation of the same devices as in embodiment 24 is omitted. The decoder 3130 decodes the coded signal 3111, and issues the identification signal 3109. The switch 3120 and switch 3128 select the coded signal corresponding to coding depending on the identification signal 3109. The output of the switch 3128 is formed in blocks, and the blocks are integrated in the reverse block forming device 3132, and a decoded signal 3133 is obtained as a decoded image signal.

As described herein, according to embodiment 25, having the portion relating to coding in embodiment 24, the coded signal coded in embodiment 23 and embodiment 24 can be decoded correctly.

### (Embodiment 26)

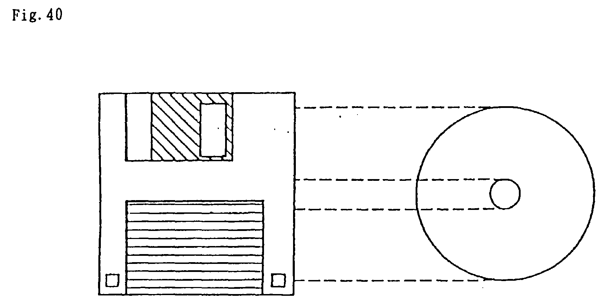

The invention is realized by a program, and by recording and transferring it in a recording medium such as floppy disk, it can be easily executed in other independent computer system. As an example of recording medium, a floppy disk is shown in Fig. 40.

In embodiment 26, a floppy disk is shown as a recording medium, but it may be similarly realized by IC card, CD-ROM, cassette or others capable of recording the program.

In the description of embodiment 1 through embodiment 15, the filter means is explained as the LPF, but it may be also realized by linear interpolating filter, bilinear filter, and the like.

As described specifically, by applying the invention, if the input image signal has a sharp density change before or after the shape boundary as in computer graphics, or there is a discrete density in every region aside from a uniform density, an efficient coding step is selected adaptively, and efficient coding is realized, while accurate decoding is possible. That is, according to the invention, in coding of transmissivity signal, CG or other images, the optimized image coding apparatus and image decoding apparatus can be realized from the viewpoint of bit rate.

In the invention, since the coded signal by coding can be separated into shape coded signal, image coded signal and differential signal, the scalability of coding is easily realized by varying the coded signal issued depending on the coding bit rate.

## Claims

1. An image coding method comprising:
a step of extracting a feature signal expressing the feature of an input image signal,
a coding step for performing different image coding processes suited to each feature information of said extracted feature signal, and
a step of coding an identification signal for identifying each one of said plural coding processes.

2. An image coding method of claim 1, wherein image shape information is extracted as a feature signal of input image signal at the step of extracting a feature signal, and pixel replacing processing of at least one region portion out of shape boundary inside region, boundary region, and boundary outside region is executed depending on said shape information at the coding step.

3. An image coding method of claim 1, further comprising: a discrete step of converting the pixel value of input image signal from multi-value to discrete value, and
a step of filtering and interpolating said discrete output,
wherein said discrete output of coding step or said filtered and interpolated output and the parameter of said filter are coded.

4. An image decoding method comprising:
a step of decoding an identification signal of an input image signal coded by a coding method of claim 1, and
a decoding step of decoding by applying an image decoding process depending on said decoded identification signal on said input image signal.

5. An image decoding method of claim 4, wherein the image decoding process depending on the identification signal includes pixel replacing process of at least one region of shape boundary inside region, boundary region, boundary outside region depending on said shape information, by extracting the image shape information of input image signal.

6. An image decoding method of claim 4, wherein the image decoding process depending on the identification signal includes decoding process for decoding the pixel value of the input image signal as discrete value, and decoding process for decoding said pixel value as multiple value.

7. An image coding apparatus comprising:
image feature information extracting means for extracting a feature signal for expressing a feature of an input image signal,
coding means for performing different image coding processes depending on the feature information from the feature signal extracted by said image feature information extracting means, on said input image signal, and
identification signal coding means for coding the identification signal for identifying said plural coding processes.

8. An image coding apparatus of claim 7, wherein image information feature extracting means extracts image shape information as a feature signal, and coding means performs pixel replacing processing of at least one region portion out of shape boundary inside region, boundary region, and boundary outside region depending on said shape information.

9. An image coding apparatus of claim 7, further comprising:
discrete means for converting the pixel value of input image signal from multi-value to discrete value, and
filtering means for filtering and interpolating the output of said discrete means,
wherein coding means codes either the output of said discrete means or the output of filtering means.

10. An image decoding apparatus comprising:
identification signal decoding means for decoding ,an identification signal of an input image signal coded by a coding method of claim 1, and
decoding means for decoding by applying an image decoding process depending on said decoded identification signal on said input image signal.

11. An image decoding apparatus of claim 10, wherein the image decoding process depending on the identification signal of decoding means includes pixel replacing process of at least one region of shape boundary inside region, boundary region, boundary outside region depending on said shape information, by extracting the image shape information of input image signal.

12. An image decoding apparatus of claim 10, wherein the image decoding process depending on the identification signal of decoding means includes decoding process for decoding the pixel value of the input image signal as discrete value, and decoding process for decoding said pixel value as multiple value.

13. An image coding method for coding an image signal comprising:
a step of extracting shape information from an image signal,
a step of replacing a pixel value outside of a shape of said image signal with a pixel value generated from a pixel value inside of a shape of said image signal, and
a step of coding the pixel value as a result of said replacing and said shape information.

14. An image decoding method of decoding a coded, signal by the image coding method of claim 13, wherein coded signals of pixel value and shape information are decoded, a shape inside and a shape outside are judged from said decoded shape information, and the coded signal of said image is decoded by replacing the pixel positioned in the shape outside among the decoded pixel value with the pixel value showing the shape outside.

15. An image coding method of claim 13, wherein shape information is coded by contour line.

16. An image decoding method of claim 14, being an image decoding method for decoding a coded signal in the image coding method of calm 15, wherein the shape information coded by contour line is decoded by contour line.

17. An image coding method for coding an image signal comprising:
a step of extracting shape information from an image signal,
a step of defining a pixel value of shape inside as a constant value, and
a step of coding said shape inside pixel value and shape information.

18. An image decoding method for decoding a coded signal of the image coding method of claim 17,
wherein coded signals of said shape inside pixel value and shape information are decoded, a shape inside and a shape outside are judged from said decoded shape information, and the shape inside pixel value is defined as said decoded shape inside pixel, value.

19. An image coding method of any one of claims 13 through 16, wherein the boundary of shape is judged from said shape information, and the pixel in the boundary is coded, aside from shape inside.

20. An image decoding method of claim 14, being an image decoding method for decoding a coded signal in the image coding method of claim 19, wherein the boundary is judged from the decoded shape information, and the coded signal of the pixel in the boundary is decoded in the boundary.

21. An image coding method of claim 19, wherein specified processing is done on the pixel in the boundary, and the pixel in the processed boundary and the specified processing method are coded.

22. An image decoding method of claim 20, being an image decoding method for decoding a coded signal in the image coding method of claim 21, wherein said specified processing method is decoded, said specified processing method is applied in the boundary, and the coded signal of the pixel in said boundary is decoded.

23. An image coding method of any one of claims 19 or 21, wherein the pixel in the boundary is interpolated depending on the shape inside pixel and shape outside pixel, and the differential signal of the interpolated pixel and the input image signal is coded.

24. An image decoding method of claim 22, being an image decoding method for decoding a coded signal in the image coding method of claim 23, wherein said coded differential signal of pixel of the boundary is decoded, the pixel of the boundary is interpolated depending on the pixels inside of shape and outside of shape of said decoded image signal, the differential signal of the pixel of the boundary is added to the interpolated pixel of the boundary, and the coded signal of the pixel of the boundary is decoded.

25. An image coding method of any one of claims 13 or 17, wherein a predicted image of the image to be coded is created, and the differential value of said image signal and the predicted image is coded to obtain a coded signal.

26. An image decoding method of any one of claims 14 or 18, being an image decoding method for decoding a coded signal in the image coding method of claim 25, wherein said coded differential signal is decoded, a predicted image of coded image is created, said decoded image signal and pixel value of said predicted image are added, and the coded signal is decoded.

27. An image coding method of claim 25, wherein the difference is calculated after converting the pixel outside of shape of said predicted image into a specified value.

28. An image coding method of claim 26, wherein the difference is calculated after converting the pixel outside of shape of said predicted image into a specified value.

29. An image coding method of claim 25, wherein said predicted image is created from the image before or after, or before and after in time, in coding of a moving picture.

30. An image coding method of claim 26, wherein said predicted image is created from the image before or after, or before and after in time, in coding of a moving picture.

31. An image coding method for coding an image signal comprising:
a step of determining a reference image of an image to be coded,
a step of creating a predicted image by multiplying the pixel value of predicted image by a specified value,
a step of calculating the difference of said image signal and the pixel value of said predicted image, and
a step of coding said multiplied value and said difference.

32. An image decoding method for decoding a coded signal in the image coding method of claim 31,
wherein said difference is decoded, said multiplied value is decoded, the pixel value of reference image is multiplied by said multiplied value to create a predicted image, said coded difference and the pixel value of said predicted image are added, and the image is decoded.

33. An image coding method for coding an image signal comprising:
a step of making discrete said image signal by plural density values,
a step of coding each layer of the discrete image, and
a step of multiplexing a coded signal of each layer and issuing.

34. An image decoding method for decoding a coded signal in the image coding method of claim 33,
wherein said multiplexed coded signal is separated into image coded signal of each layer, the coded signal of each layer is decoded, and said decoded image signal of each layer is combined.

35. An image coding apparatus comprising:
shape extracting means for extracting a shape from an input image,
shape coding means for coding the shape extracted by the shape extracting means,
off-shape pixel replacing means for replacing an input pixel judged to be outside of shape from said shape, and
image coding means for coding the input image replaced by said off-shape pixel replacing means,
wherein the coded signals of said shape coding means and image coding means are issued.

36. An image decoding apparatus for decoding an image signal by decoding the coded signal in claim 35, comprising:
shape decoding means for decoding a coded signal of shape,
image decoding means for decoding the coded signal of replaced image signal, and
off-shape pixel restoring means for replacing the pixel at position judged to be outside of shape from the shape decoded by said shape coding means by a pixel value expressing outside of shape and issuing,
wherein the output of said off-shape pixel restoring means is a decoded image signal.

37. An image coding apparatus of claim 35, further comprising:
boundary extracting means for extracting a shape boundary from the shape extracted by said shape extracting means,
boundary pixel replacing means for replacing the pixel value of the pixel judged to be boundary,
image signal coding means for coding an input image replaced by said off-shape pixel replacing means and said boundary pixel replacing means,
boundary interpolating means for interpolating the pixel of the boundary from the pixels outside of shape and inside of shape,
differential mans for calculating the difference of the pixel of said interpolated boundary and the pixel of the boundary of the input image, and
boundary coding means for coding the difference issued by said differential means,
wherein coded signals of said shape coding means, image coding means, and boundary coding means are issued.

38. An image decoding means of claim 36, being an image decoding apparatus for decoding an image signal by decoding the coded signal in claim 37, further comprising:
boundary decoding means for decoding a coded signal of the difference of pixel of the boundary,
boundary extracting means for extracting the boundary from the shape decoded by said shape decoding means,
boundary interpolating means for interpolating the pixel of the boundary from the pixels outside of shape and inside of shape of the image issued by said off-shape pixel restoring means,
adding means for adding said interpolated pixel, and the difference of the pixel of the boundary decoded by said boundary decoding means, and
boundary pixel replacing means for replacing the pixel in the boundary of the image signal issued by the off-shape pixel restoring means by the pixel value of the boundary issued by the adding means,
wherein the image signal replaced by said boundary pixel replacing means is issued as a decoded image signal.

39. An image coding apparatus of claim 33, further comprising:
a delay buffer for holding a reference image,
motion compensation means for compensating the motion of the image held in the delay buffer and issuing a predicted image,
differential means for calculating the difference of said predicted image and input image,
image signal decoding means for decoding an image coded signal coded from said differential signal, and
adding means for adding the image of said decoded differential signal and said predicted image, and feeding, into the delay buffer as a new reference image,
wherein the coded signal coded by said image signal coding means and shape coding means are issued.

40. An image decoding apparatus of claim 34, being an image decoding apparatus for decoding an image signal by decoding the coded signal in claim 39, further comprising:
image signal decoding means for decoding a coded differential signal,
a delay buffer for holding a reference image,
motion compensation means for compensating the motion of the image held in the delay buffer and issuing a predicted image,
adding means for adding said predicted image and the differential signal decoded by said image signal decoding means, and feeding into the delay buffer as a new reference image,
wherein the image signal issued by said adding means is a decoded image signal.

41. An image coding apparatus for coding an image signal comprising:
a delay buffer for receiving an image signal and holding a reference image,
pixel ratio detecting means for comparing the reference image held by said delay buffer and an input image, and detecting the ratio of pixel values of both images,
pixel ratio coding means for coding said pixel ratio,
differential means for calculating the difference, of said reference image and input image,
image coding means for coding the differential value issued by said differential means, and
multiplying means for multiplying said pixel ratio and an image signal issued by said image coding means, and feed to said delay buffer as a new reference image,
wherein the coded signals coded by said image signal coding means and pixel ratio coding means are issued.

42. An image decoding apparatus for decoding the coded signal in claim 41, comprising:
image signal decoding means for decoding an image coded signal,
pixel ratio decoding means for decoding a pixel ratio decoded signal,
a delay buffer for holding a reference image,
multiplying means for multiplying the pixel value of said reference image by said pixel ratio, and
adding means for adding the differential image signal issued by said image signal decoding means and the image signal issued by said multiplying means, and obtaining a new reference image,
wherein the output of said adding means is a decoded image signal.

43. An image coding apparatus for coding an image signal comprising:
image discrete means for making discrete an input, image by plural density values,
image coding means for coding each layer of image stratified to be discrete by said image discrete means, and
multiplexing means for multiplexing a coded signal of each layer,
wherein the image signal multiplexed by said multiplexing means is a coded image.

44. An image decoding apparatus for decoding an image signal by decoding the coded signal in claim 43, comprising:
coded signal separating means for separating a multiplexed coded signal,
image signal decoding means for decoding the image coded signal of each layer separated by said coded signal separating means, and
decoded image combining means for combining the outputs of the layers of said image signal decoding means reversely from said image discrete means.

45. An image coding apparatus comprising:
m-value forming means for receiving an image signal, and converting said input signal into an m-value (m being 2 or greater integer),
image coding means for coding the output of said m-value forming means by reference to the decoded image signal stored in a memory described below as required,
image decoding means for decoding the output of said image coding means by reference to the decoded image signal stored in the memory described below as required,
reverse m-value forming means for converting the output of said image decoding means from m-value to multi-value,
filter means for converting the pixel value of the output of said reverse m-value forming method according to a specific rule, and issuing,
selecting means for selecting either the output of said filter means or the output of said reverse m-value forming means,
a memory for storing the output of said selecting means for reference by said image coding means and said image decoding means, and
identification signal coding means for coding an identification signal showing which one is selected in said selecting means,
wherein the output of said image coding means and the output of said identification signal coding means are coded signals.

46. An image coding apparatus of claim 45, wherein said selecting means changes over the output of reverse m-value forming means and output of filter means in a block unit composed of a specific number of pixels.

47. An image coding apparatus of claim 45, wherein said selecting means compares the output of reverse m-value forming means and the output of filter means with an image input signal, and selects the one smaller in difference from said image input signal.

48. An image coding apparatus of claim 45, wherein said filter means is a low pass filter for suppressing high frequency components.

49. An image decoding apparatus for receiving a coded signal and decoding said coded signal, comprosing:
identification signal decoding means for decoding an identification signal from said coded signal,
image decoding means for decoding said coded signal by reference to a decoded image signal stored in a memory described below.
reverse m-value forming means for converting the output of said image decoding means from m-value (m being 2 or greater integer) to multi-value,
filter means for converting the pixel value of the output of said reverse m-value forming means according to a specific rule, and issuing,
selecting means for selecting either the output of said filter means or the output of said reverse m-value forming means by said identification signal and issuing, and
a memory for storing the output of said selecting means for reference by said image decoding means,
wherein the output of said selecting means is a decoded image signal.

50. An image decoding apparatus of claim 49, wherein said selecting means changes over the output of reverse m-value forming means and output of filter means in a block unit composed of a specific number of pixels.

51. An image decoding apparatus of claim 49, wherein said filter means is a low pass filter for suppressing high frequency components.

52. An image coding apparatus comprising:
image dividing means for receiving an image signal, and dividing said input signal into m kinds (m being 2 or greater integer),
image coding means for coding each output of said image dividing means by reference to the decoded image signal stored in a memory described below as required,
image decoding means for decoding the output of said image coding means by reference to the decoded image signal stored in the memory described below as required,
filter means for converting each output of m kinds of said image decoding means according to a specific rule, and issuing,
selecting means for selecting either the output of said filter means or the output of said image decoding means in each output of m kinds and issuing,
image combining means for combining m kinds of outputs of said selecting means into one and issuing,
a memory for storing the output of said image combining means for reference by said image coding means and said image decoding means, and
identification signal coding means for coding an identification signal showing which one is selected in said selecting means,
wherein the output of said image coding means and the output of said identification signal coding means are coded signals.

53. An image decoding apparatus for receiving a coded signal and decoding said coded signal, comprising:
identification signal decoding means for decoding an identification signal from said coded signal,
image decoding means for decoding said coded signal by reference to a decoded image signal stored in a memory described below and decoding m kinds (m being 2 or greater integer) of image signal,
filter means for converting the pixel value of each output of m kinds of said image decoding means according to a specific rule, and issuing,
selecting means for selecting either the output of said filter means or any output of said image decoding means in every output of m kinds by said identification signal and issuing,
image combining means for combining the outputs of said selecting means into one and issuing, and
a memory for storing the output of said image combining means for reference by said image decoding means,
wherein the output of said image combining means is a decoded image signal.

54. An image coding apparatus comprising:
image dividing means for receiving an image signal, and dividing said input signal into m kinds (m being 2 or greater integer),
image coding means for coding each output of said image dividing means by reference to the decoded image signal stored in a memory described below as required,
image decoding means for decoding the output of said image coding means by reference to the decoded image signal stored in the memory described below as required,
image combining means for combining m kinds of outputs of said selecting means into one and issuing,
filter means for converting the pixel of the output of the image combining means according to a specific rule, and issuing,
selecting means for selecting either the output of said filter means or the output of said image combining means, and issuing,
a memory for storing the output of said selecting means for reference by said image coding means and said image decoding means, and
identification signal coding means for coding an identification signal showing which one is selected in said selecting means,
wherein the output of said image coding means and the output of said identification signal coding means are coded signals.

55. An image coding apparatus of claim 52 or 54, wherein said selecting means changes over the output of image decoding means and output of filter means in a block unit composed of a specific number of pixels.

56. An image coding apparatus of claim 52 or 54, wherein said selecting means compares the output of image decoding means and the output of filter means with an image input signal, and selects the one smaller in difference from said image input signal.

57. An image coding apparatus of claim 52 or 54, wherein said filter means is a low pass filter for suppressing high frequency components.

58. An image decoding apparatus for receiving a coded signal and decoding said coded signal, comprising:
identification signal decoding means for decoding an identification signal from said coded signal,
image decoding means for decoding said coded signal by reference to a decoded image signal stored in a memory described below, and decoding m kinds (m being 2 or greater integer) of image signals,
image combining means for combining the outputs of said image decoding means into one and issuing,
filter means for converting the pixel value of the output of said image combining means according to a specific rule, and issuing,
selecting means for selecting either the output of said filter means or the output of said image decoding means by said identification signal and issuing, and
a memory for storing the output of said selecting means for reference by said image decoding means,
wherein the output of said selecting means is a decoded image signal.

59. An image decoding apparatus of claim 53 or 58, wherein said selecting means changes over the output of image decoding means and output of filter means in a block unit composed of a specific number of pixels.

60. An image decoding apparatus of claim 53 or 58, wherein said filter means is a low pass filter for suppressing high frequency components.

61. An image coding apparatus comprising:
block forming means for receiving an image signal, and dividing said input signal into blocks composed of a specific number of pixels,
pixel decimating means for decimating pixels of the output of said block forming means in every block by reference to a decoded image signal stored in a memory described below,
image coding means for coding the output of said pixel decimating means,
image decoding means for decoding the output of said image coding means,
pixel interpolating means for interpolating pixels of the output of said image decoding means in every block by reference to the decoded image signal stored in the memory described below, and
a memory for storing the output of said pixel interpolating means for reference by said image coding means, image decoding means, pixel decimating means, and pixel interpolating means,
wherein the output of said image coding means is a coded signal.

62. An image coding apparatus of claim 61, wherein the pixel is decimated or interpolated by using the pixel within the own block only if it is impossible to refer to the decoded image signal at the time of pixel decimation or pixel interpolation.

63. An image decoding apparatus for receiving a coded signal and decoding said coded signal, comprising:
image decoding means for decoding said coded signal,
pixel interpolating means for interpolating pixels of the output of said image decoding means in every block by reference to a decoded image signal stored in a memory described below,
a memory for storing the output of said pixel interpolating means for reference by said image decoding means and pixel interpolating means, and
reverse block forming means for integrating the blocks of the output of said pixel interpolating means to obtain as an image signal,
wherein the output of said reverse block forming means is a decoded image signal.

64. An image decoding apparatus of claim 63, wherein the pixel is decimated or interpolated by using the pixel within the own block only if it is impossible to refer to the decoded image signal at the time of pixel decimation or pixel interpolation.

65. An image coding apparatus comprising:
block forming means for receiving an image signal, and dividing said input signal into blocks composed of a specific number of pixels,
m-value forming means for converting the output of said block forming means into m-value (m being 2 or greater integer),
first image coding means for coding the output of said m-value forming means,
second image coding means for decoding the output of said block forming means,
selecting means for selecting either the output of said first image coding means or the output of said second image coding means, and issuing, and
identification signal coding means for coding an identification signal showing which one is selected by said selecting means,
wherein the output of said selecting means and the output of said identification signal coding means are coded signals.

66. An image coding apparatus of claim 65, wherein the selecting means compares the coding error by the first image coding means and the coding error by the second image coding means, and selects the coding technique smaller in the error.

67. An image decoding apparatus for receiving a coded signal and decoding said coded signal, comprising:
identification signal decoding means for decoding an identification signal from said coded signal,
first image decoding means for decoding said coded signal,
reverse m-value forming means for converting the output of said first image decoding means from m-value (m being 2 or greater integer) into multi-value,
second image decoding means for decoding said coded signal,
selecting means for selecting either the output of said reverse m-value forming means or the output of said second image decoding means by said identification signal, and issuing, and
reverse block forming means for integrating the blocks of the output of said selecting means to obtain an image signal,
wherein the output of said reverse block forming means is a decoded image signal.

68. An image coding method comprising:
a step of receiving an image signal, and converting said input signal into an m-value (m being 2 or greater integer),
a step of coding and decoding said converted m-value by referring to a decoded image signal as required,
a step of converting said decoded m-value into a multi-value signal,
a step of using said converted multi-value signal directly as decoded signal or converting by a specific rule to obtain as a decoded image signal depending on an instruction from outside, and
a step of using said instruction from outside and coded signal of said m-value as coded signals.

69. An image decoding method for receiving a coded signal and decoding said coded signal,
wherein identification information and m-value signal by reference to decoded image signal if necessary are decoded from said coded signal, said decoded m-value is converted into a multi-value signal, said converted multi-value signal is directly used as a decoded signal or converted by a specific rule to be used as a decoded image signal depending on said decoded identification information.

70. An image coding method comprising:
a step of receiving an image signal, and dividing said input signal into m types (m being 2 or greater integer),
a step of coding and decoding said divided signals by referring to a decoded image signal as required,
a step of converting said decoded signals by a specific rule depending on an instruction from outside as filtering process,
a step of combining said filtered signals to obtain a decoded image signal, and
a step of using said instruction from outside and coded signals of divided signals as coded signals.

71. An image decoding method for receiving a coded signal and decoding said coded signal,
wherein identification information and m kinds (m being 2 or greater integer) of divided signals by reference to decoded image signal if necessary are decoded from said coded signal, said decoded signals are converted by a specific rule depending on said decoded identification information as filter processing, and said filtered signals are combined to obtain a coded image signal.

72. An image coding method comprising:
a step of receiving an image signal, and dividing said input signal into m types (m being 2 or greater integer),
a step of coding and decoding said divided signals by referring to a decoded image signal as required,
a step of combining said decoded signals and converting said combined signal by a specific rule depending on an instruction from outside as filtering process to obtain a decoded image signal, and
a step of using said instruction from outside and coded signals of divided signals as coded signals.

73. An image decoding method for receiving a coded signal and decoding said coded signal,
wherein identification information and m kinds (m being 2 or greater integer) of divided signals by reference to decoded image signal if necessary are decoded from said coded signal, said decoded signals are combined, and the combined signal is converted by a specific rule depending on said decoded identification information as filter processing, thereby obtaining a coded image signal.

74. An image coding method comprising:
a step of receiving an image signal, and dividing said input signal into blocks composed of a specific number of pixels,
a step of coding and decoding by decimating pixels in every divided block by referring to a decoded image signal,
a step of interpolating the pixels of said decoded result in every block by reference to the decoded image signal, and integrating the interpolated blocks to obtain a decoded image signal, and
a step of using the coded signal by decimating the pixels as a coded signal.

75. An image decoding method for receiving a coded signal and decoding said coded signal,
wherein said coded signal is decoded, the pixels of the decoded result are interpolated in every block composed of a specific number of pixels by referring to a decoded image signal, and the interpolated blocks are combined to obtain a decoded image signal.

76. An image coding method comprising:
a step of receiving an image signal, and dividing said input signal into blocks composed of a specific number of pixels,
a step of coding by a first coding method by forming said divided blocks into m-value (m being 2 or greater integer), or coding the divided blocks directly by a second coding method, depending on an instruction from outside, and
a step of using said instruction from outside and coded signals of said divided blocks as coded signals.

77. An image decoding method for receiving a coded signal and decoding said coded signal,
wherein identification information is decoded from said coded signal, said coded signal is decoded by a first decoding method to convert from m-value (m being 2 or greater integer) into multi-value by reverse m-value forming, or said coded signal is decoded by a second decoding method, depending on said decoded identification information, and said reverse m-value formed result or decoded result by said second decoding method is combined to obtain a coded image signal.

78. A recording medium of computer, wherein a program for realizing at least one of claims 1, 4, 7, 10 13, 17, 31, 33, 35, 36, 41 42, 43, 44, 45, 49, 52, 53, 54, 58, 61, 63 65, and 67 through 77 is recorded.
